# EUROPÄISCHE PATENTSCHRIFT

(11) **EP 4 200 195 B1**
(45) Veröffentlichungstag und Bekanntmachung des Hinweises auf die Patenterteilung: **10.07.2024**
(21) Anmeldenummer: 21707635.5
(22) Anmeldetag: 18.02.2021
(51) Int. Cl.: B62D 63/02, B62D 25/20, B60K 1/04

(54) **GRUPPE VON KRAFTFAHRZEUGEN**
GROUP OF MOTOR VEHICLES
GROUPE DE VÉHICULES AUTOMOBILES

(30) Priorität: 19.08.2020 WO PCT/EP2020/073225
(43) Veröffentlichungstag der Anmeldung: 28.06.2023
(73) Patentinhaber: Bayerische Motoren Werke Aktiengesellschaft, 80809 München (DE)
(72) Erfinder: HAUG, Wolfram, 82054 Sauerlach (DE); KUTZSCHBACH, Joerg, 85238 Petershausen (DE); BREU, Thomas, 83533 Edling (DE); DURMIS, Josip, 85586 Poing (DE)
(86) Internationale Anmeldenummer: PCT/EP2021/054041
(87) Internationale Veröffentlichungsnummer: WO 2022/037808

(56) Entgegenhaltungen:
- DE-A1- 102011 012 124
- DE-A1- 102017 206 566
- US-A1- 2017 246 945

## Beschreibung

Die Erfindung betrifft eine Gruppe von Kraftfahrzeugen gemäß Anspruch 1.

In Zusammenhang mit der vorliegenden Erfindung sind die nachfolgenden Begriffsbestimmungen von Bedeutung:
"Fahrzeugtyp": Im umgangssprachlichen Gebrauch auch als "Fahrzeugmodell" bezeichnet, also Kraftfahrzeuge, deren äußeres Erscheinungsbild (unabhängig vom Antriebskonzept) im Wesentlichen identisch ist. Als Beispiel hierzu ist der Fahrzeugtyp mit der Modellbezeichnung "BMW 2er Active Tourer" der Anmelderin genannt. Zum Zeitpunkt der Einreichung der vorliegenden Patentanmeldung ist dieser Fahrzeugtyp in mehreren Varianten mit Verbrennungsmotor erhältlich sowie in einer Variante mit Hybridantrieb ("BMW 225xe iPerformance Active Tourer"), wobei die Variante mit Hybridantrieb ein im Wesentlichen identisches äußeres Erscheinungsbild zu den Kraftfahrzeugen mit Verbrennungsmotor aufweist.

"Gruppe von Kraftfahrzeugen": Gesamtheit der Kraftfahrzeuge eines Fahrzeugtyps, unabhängig vom Antriebskonzept.

"Antriebskonzepte" sind "Verbrennungsmotor" (bzw. "Verbrennungsantrieb"), "Elektromotor" (bzw. "Elektroantrieb") und "Hybridantrieb", nachfolgend in dieser Reihenfolge auch mit "ICE" (Internal Combustion Engine) bzw. "BEV" (Battery Electric Vehicle) bzw. "HEV" ("Hybrid Electric Vehicle") bezeichnet. "HEV" (Hybrid Electric Vehicle) schließt hierbei auch "PHEV" ("Plug-in-Hybrid Electric Vehicle") ein.

"Verbrennungsmotor": Mit einem Kraftstoff (Benzin, Diesel, Wasserstoff, etc.) betriebene Brennkraftmaschine zum Antrieb eines Kraftfahrzeugs.

"Elektromotor": elektrische Maschine zum Antrieb eines Kraftfahrzeugs

"Batterie": Speicher zur Aufnahme von elektrischer Energie für die Speisung des Elektromotors, also "Antriebsbatterie". Häufig wird auch der Begriff "Hochvoltspeicher" verwendet.

"Hybridantrieb": Kombination aus einem Verbrennungsmotor und wenigstens einem Elektromotor als Antriebsaggregate zum Antrieb eines Kraftfahrzeugs. Die Variante des Hybridantriebs mit der Möglichkeit, die Batterie des Kraftfahrzeugs mit elektrischer Energie von außerhalb des Kraftfahrzeugs laden zu können, wird üblicherweise als "Plug-in-Hybrid Electric Vehicle" (PHEV) bezeichnet. Die Variante des Hybridantriebs ohne Möglichkeit einer externen Aufladung wird üblicherweise als "Hybrid Electric Vehicle" (HEV) bezeichnet.

"Rohbaustruktur": Verbund der Bauteile, die die tragende Struktur des Kraftfahrzeugs bilden. Die Bauteile sind beispielsweise miteinander verbundene Blechbauteile. Auch ein Verbund aus Blech- oder Gussbauteilen ist hiervon umfasst. Bei den miteinander verbundenen Blechbauteilen kann es sich um Bleche unterschiedlicher Materialien handeln, beispielsweise Stahl und Aluminium.

"Bodenblech-Baugruppe": Bauteile der Rohbaustruktur, die in ihrer Gesamtheit den unteren Fahrgastzellenbereich des Kraftfahrzeugs bilden.

"Vorderwagen-Baugruppe": Bauteile der Rohbaustruktur, die in ihrer Gesamtheit in Fahrzeuglängsrichtung den tragenden Bereich einschließlich einer Stirnwand bilden. Dazu gehören insbesondere die vorderen Längsträger, die mit der Vorderachse ein Antriebsaggregat aufnehmen und im Fall eines Frontcrashs in nennenswertem Umfang Crashenergie abbauen.

"Gepäckraumboden-Baugruppe": Bauteile der Rohbaustruktur, die in ihrer Gesamtheit in Fahrzeuglängsrichtung den Bereich von einem "vorderen Querträger Hinterachse" bis zu einem Heckabschlussträger bilden. In Fahrzeugquerrichtung erstreckt sich die Gepäckraumboden-Baugruppe zwischen einem rechten und einem linken Radhaus und schließt die Hecklängsträger ein.

Es ist allgemein bekannt, dass Hersteller von Kraftfahrzeugen zur Erhöhung der Wirtschaftlichkeit des Fertigungsprozesses ihrer Kraftfahrzeuge so weit als möglich einheitliche Komponenten und vereinheitlichte Schnittstellen für die Rohbaustruktur verwenden, beispielsweise um Karosserievarianten eines Fahrzeugs herzustellen, also zum Beispiel neben einer Limousine eine Karosserievariante vom Typ Kombinationskraftwagen und/oder Coupé und/oder Cabriolet etc.

Weiterhin setzen Hersteller von Kraftfahrzeugen auch für Fahrzeuge, die unterschiedlichen "Fahrzeugklassen" oder "Fahrzeugsegmenten" angehören, einheitliche Komponenten für die Rohbaustruktur ein, beispielsweise für Kraftfahrzeuge der Mittelklasse und der oberen Mittelklasse. Diese Verwendung von einheitlichen Komponenten ist bei einigen Herstellern von Kraftfahrzeugen beispielsweise unter dem Begriff "Plattformstrategie" bekannt.

In diesem Zusammenhang ist es aus der WO 2016/192921 A1 bekannt, zur Darstellung von Kraftfahrzeugen unterschiedlicher Fahrzeugklassen "Vorderwagenmodule" und "Fahrgastzellenmodule" bereitzustellen, wobei die Module ohne Einschränkung kombinierbar sind und auf diese Weise die Kraftfahrzeuge der unterschiedlichen Fahrzeugklassen gebildet werden können. Hierbei weisen die Vorderwagenmodule unterschiedliche Motorträgerabstände und die Fahrgastzellenmodule unterschiedliche Abstände der Vordersitze auf.

Hersteller von Kraftfahrzeugen bieten von einem Fahrzeugtyp neben Fahrzeugen mit einem Verbrennungsmotor ("Verbrennungsantrieb") zunehmend Fahrzeuge mit einem Elektromotor als Antriebsaggregat ("Elektroantrieb") und/oder Fahrzeuge mit einer Kombination aus einem Verbrennungsmotor und einem Elektromotor an ("Hybridantrieb"). Somit gibt es von einem Fahrzeugtyp Kraftfahrzeuge mit zwei oder drei unterschiedlichen Antriebskonzepten. Die drei Antriebskonzepte werden nachfolgend als "Verbrennungsantrieb", "Elektroantrieb" und "Hybridantrieb" bezeichnet.

Dabei ist es aus wirtschaftlichen Erwägungen, die die Anmelderin angestellt hat, besonders interessant, die Kraftfahrzeuge mit den oben genannten drei Antriebskonzepten mit möglichst einheitlichen Komponenten für die Rohbaustruktur fertigen zu können. Da nicht abzusehen ist, wie sich die Nachfrage auf die drei Antriebskonzepte innerhalb eines Fahrzeugtyps aufteilen wird, ist eine größtmögliche Flexibilität in der Fertigung anzustreben, um situationsabhängig auf Veränderungen in der Nachfrage nach den Kraftfahrzeugen mit den unterschiedlichen Antriebskonzepten reagieren zu können.

Es ist allgemein bekannt, Kraftfahrzeuge mit "Elektroantrieb" mit einer großflächig im Bereich des Fahrzeugbodens angeordneten Batterie zu versehen. Hierfür ist der Bodenbereich dieser Kraftfahrzeuge im Vergleich zu einem Kraftfahrzeug desselben Fahrzeugtyps mit "Verbrennungsantrieb" höher angeordnet, bevorzugt unter Beibehaltung derselben Position der Sitze im Kraftfahrzeug, also bei identischem H-Punkt (Hüft-Punkt). Der identische H-Punkt ermöglicht bei den Kraftfahrzeugen eines Fahrzugtyps eine gleiche Auslegung des Innenraums, einschließlich der Anordnung der Pedale und anderer Bedienelemente. Außerdem ergeben sich gleiche Maße für die Kopffreiheit und auch die Ausstattungsbauteile können im Wesentlichen gleich gehalten werden. Ausnahmen hiervon bilden beispielsweise Bodenverkleidungen, Kabelbäume, Fondluft-Kanäle etc.

Weiterhin ist aus der DE102008055738A1 ein Modulsystem zum Aufbau einer Kraftwagenkarosserie bekannt, bei dem Module aus wenigstens zwei Modulgruppen frei miteinander kombinierbar und auswählbar sind. Insbesondere ist dabei vorgesehen, mehrere Hauptbodenmodule sowie mehrere Vorderwagen- und Heckwagenmodule frei kombinierbar auszuführen, so dass beispielsweise unterschiedliche Antriebskonzepte beziehungsweise Bodenhöhen der freien Kombinierbarkeit des Hauptbodens mit Vorderwagen und Heckwagen nicht im Wege stehen. Weiterhin ist aus der DE102017206566A1 eine gattungsgemäße Gruppe von Kraftfahrzeugen eines Fahrzeugtyps bekannt.

Aufgabe der Erfindung ist es, einen neuen Ansatz für die Herstellung von Rohbaustrukturen für Kraftfahrzeuge eines Fahrzeugtyps mit den oben genannten drei unterschiedlichen Antriebskonzepten bereitzustellen, bei möglichst weitreichender Verwendung einheitlicher Komponenten für die Rohbaustruktur. Weiterhin soll durch die Erfindung ein neuer Ansatz für die Herstellung von Rohbaustrukturen für Kraftfahrzeuge eines Fahrzeugtyps mit den oben genannten drei unterschiedlichen Antriebskonzepten bereitgestellt werden, der bei den Kraftfahrzeugen mit "Hybridantrieb" die Unterbringung einer möglichst großen Batterie ermöglicht, bei möglichst weitreichender Verwendung einheitlicher Komponenten für die Rohbaustruktur auch bei den Kraftfahrzeugen mit "Verbrennungsantrieb".

Diese Aufgabe wird durch eine Gruppe von Kraftfahrzeugen mit den Merkmalen von Anspruch 1 gelöst.

Kerngedanke der Erfindung ist es, für die Darstellung der Kraftfahrzeuge aller drei Antriebskonzepte von der "Architektur" der Kraftfahrzeuge mit "Elektroantrieb" auszugehen.

Vor dem Hintergrund der zu erwartenden zunehmenden Elektrifizierung der Kraftfahrzeuge und der daraus folgenden Reduzierung der Anzahl neu auf den Markt kommender Kraftfahrzeuge mit "Verbrennungsantrieb" wird erfindungsgemäß die Basis für eine neue Fahrzeugarchitektur und für Ableitungen daraus auf den "Elektroantrieb" gelegt. Mit dieser grundsätzlichen Umkehr des bisherig vorherrschenden Architekturansatzes wird die Rohbaustruktur eines Kraftfahrzeugs mit "Elektroantrieb" "die neue Norm".

Dieser neue Architekturansatz nutzt den Grundsatz einer "angehobenen" Bodenblech-Baugruppe der Kraftfahrzeuge mit "Elektroantrieb" für alle Antriebskonzepte der Kraftfahrzeuge eines Fahrzeugtyps.

Die "angehobene" Bodenblech-Baugruppe zeichnet sich dadurch aus, dass durch die "Anhebung" an der Unterseite der Bodenblech-Baugruppe ein Bauraum für die Unterbringung einer Batterie zur Verfügung gestellt wird, der bei einem "konventionellen Kraftfahrzeug" mit "Verbrennungsantrieb" nicht zur Verfügung steht. Dies wird realisiert, indem die vorderen Längsträger der Vorderwagen-Baugruppe im Übergangsbereich zwischen der Vorderwagen-Baugruppe und der Bodenblech-Baugruppe, also im Bereich einer Stirnwand, enden. Das bedeutet in Zusammenhang mit der vorliegenden Erfindung, dass die vorderen Längsträger nicht an der einer Fahrbahn zugewandten Unterseite der Bodenblech-Baugruppe fortgeführt werden, wie dies bei konventionellen Kraftfahrzeugen der Fall ist, um einen gleichmäßige Krafteinleitung von der Vorderwagen-Baugruppe in die Bodenblech-Baugruppe zu erreichen. Mit anderen Worten ist bei der "angehobenen" Bodenblech-Baugruppe der vordere Querträger und sein Verbindungsbereich mit den vorderen Längsträgern so ausgebildet, dass es keine Überlappung dieses Verbindungsbereichs mit der Unterseite der Bodenblech-Baugruppe gibt.

Durch den Entfall von Längsträgerstrukturen an der Unterseite der Bodenblech-Baugruppe, in Verbindung mit einem "Anheben" der Bodenblech-Baugruppe im Vergleich zu konventionellen Kraftfahrzeugen, entsteht ein Bauraum, der zur Anordnung einer großflächigen Batterie sowohl für die Kraftfahrzeuge mit "Elektroantrieb" als auch mit "Hybridantrieb" geeignet ist. Damit ist hinsichtlich der Speichergröße der Batterie eine grundlegend andere erweiterte Dimension ermöglicht. Dies ist insbesondere im Hinblick auf die zukünftig geforderte "elektrische Reichweite" von Kraftfahrzeugen mit "Hybridantrieb" von 80 bis 100 (oder mehr) Kilometern von grundlegender Bedeutung, da die zukünftige gesetzgeberische Regulatorik nur bei der oben angegebenen Reichweite finanzielle oder anderweitige Nutzungsregeln (wie zum Beispiel Einfahr- oder Parkerlaubnis) gewährt.

Erfindungsgemäß sind zwei unterschiedliche Bodenblech-Baugruppen vorgesehen, die in ihren Einbaulagen im Kraftfahrzeug eine identische Höhenlage (Hochrichtung Z) haben.

Hierbei ist eine erste Bodenblech-Baugruppe für die Kraftfahrzeuge mit "Elektroantrieb" vorgesehen.

Zudem wird erfindungsgemäß nicht nur bei den Kraftfahrzeugen "Hybridantrieb", sondern auch bei den Kraftfahrzeugen mit "Verbrennungsantrieb" eine "angehobene" zweite Bodenblech-Baugruppe eingesetzt. Damit ergibt sich als entscheidender Vorteil, dass die sich in Fahrtrichtung nach vorne anschließenden Vorderwagen-Baugruppe und/oder die sich in Fahrtrichtung nach hinten anschließende Gepäckraumboden-Baugruppe der Kraftfahrzeuge eines Fahrzeugtyps unabhängig vom Antriebskonzept einheitlich gestaltet und/oder mit einer einheitlichen Schnittstelle mit den beiden Bodenblech-Baugruppen verbunden werden können.

Die beiden Bodenblech-Baugruppen sind hinsichtlich ihrer Tragstruktur rahmenförmig aufgebaut. Sie setzen sich aus zwei seitlichen Längsträgern, einem vorderen und einem hinteren Querträger sowie wenigstens einem weiteren (mittleren) Querträger zusammen. An dieser Tragstruktur mit Längs- und Querträgern können grundsätzlich weitere Bauteile angeordnet sein, beispielsweise Bauteile, die der Befestigung und dem Anschluss von Komponenten des Kraftfahrzeugs dienen, wie beispielsweise Sitze, Mittelkonsolen, Seitenrahmen mit Türen (fahrzeuginnenseitig) und Batterien, Behälter für Kraftstoff und/oder andere Medien, Komponenten von Abgasanlagen (fahrzeugaußenseitig). Bei beiden Bodenblech-Baugruppen bilden die Längs- und Querträger eine leiterartige Rahmenstruktur mit wenigstens einem vorderen und einem hinteren Rahmenabschnitt. Insoweit sind die beiden Bodenblech-Baugruppen als Gleichteile ausgeführt, werden also, wie unten stehend noch näher definiert, auf einer Fertigungsanlage (oder auf mehreren gleichartigen Fertigungsanlagen) hergestellt, ohne Rücksicht auf die spätere Bestimmung als erste oder zweite Bodenblech-Baugruppe.

Die Rahmenabschnitte der Bodenblech-Baugruppen begrenzen jeweils fensterartige Ausschnitte, die zumindest teilweise durch wenigstens ein flächiges Verschlussbauteil ("Bodenblech") verschlossen sind und somit den Fahrzeuginnenraum vom Fahrzeugaußenraum trennen. Ein derartiges flächiges Verschlussbauteil ist beispielsweise im Bereich eines darunter angeordneten Kraftstoffbehälters zwingend erforderlich, da Kraftstoffbehälter ausschließlich im Fahrzeugaußenraum angeordnet werden dürfen. Die flächigen Verschlussbauteile sind an sich nicht so ausgelegt, dass sie eine Versteifung der Bodenblech-Baugruppe in einem Maße bewirken, das für eine ausreichende Steifigkeit der Rohbaustruktur erforderlich ist. Die Steifigkeitsanforderungen bestimmen sich aus den statischen und dynamischen Lasten im Stand und im Fahrbetrieb des Kraftfahrzeugs, einschließlich der Aufnahme von Crashkräften, der Gewährleistung von Schwingungskomfort und stabiler Fahrdynamik etc.

Erfindungsgemäß besteht der Unterschied zwischen den beiden Bodenblech-Baugruppen darin, dass die Rahmenabschnitte bei der ersten Bodenblech-Baugruppe durch wenigstens eine Batterie so ausgesteift sind, dass die oben beschriebenen Steifigkeitsanforderungen vollumfänglich erfüllt sind, während zumindest ein Rahmenabschnitt der zweiten Bodenblech-Baugruppe mit wenigstens einem aussteifenden Zusatzbauteil versehen ist.

Somit können die beiden Bodenblech-Baugruppe in einheitlicher Weise hergestellt werden, wobei sich nur bei der zweiten Bodenblech-Baugruppe ein zusätzlicher Fertigungsschritt anschließt, nämlich das Anbringen wenigstens eines aussteifenden Zusatzbauteils. Das aussteifende Zusatzbauteil kann beispielsweise ein flächiges Bauteil oder ein langgestrecktes oder ein kreuzartiges strebenförmiges Bauteil sein. Strebenförmige aussteifende Zusatzbauteile können beispielsweise von Strangprofilen gebildet sein. Das aussteifende Zusatzbauteil dient bei der zweiten Bodenblech-Baugruppe dazu, eine gleichwertige Steifigkeit wie bei der ersten Bodenblech-Baugruppe herzustellen, bei der die Steifigkeitsanforderungen maßgeblich durch die Einbindung der wenigstens einen Batterie in die Rohbaustruktur erreicht werden, wobei die wenigstens eine Batterie als tragendes Strukturbauteil fungiert.

Das aussteifende Zusatzbauteil ist dadurch charakterisiert, dass es mindestens einen Rahmenabschnitt nennenswert aussteift. Damit unterscheidet sich das aussteifende Zusatzbauteil beispielsweise von kleinflächigen Verstärkungsteilen, die zum Beispiel in Eckenbereichen oder "Kreuzungsbereichen" der rahmenförmigen Bodenblech-Baugruppe angeordnet sein können. Derartige Verstärkungsteile sind vor allem am vorderen Querträger vorgesehen, um die Krafteinleitung von den vorderen Längsträgern der Vorderwagen-Baugruppe in die Bodenblech-Baugruppe zu bewerkstelligen. Ein weiteres Kennzeichen der aussteifenden Zusatzbauteile ist deren eindeutige Zuordnung zur Bodenblech-Baugruppe zum Zweck der Aussteifung derselben. Mit anderen Worten kommt den aussteifenden Zusatzbauteilen keine wesentliche andere Aufgabe zu als die Aussteifung zumindest eines Rahmenabschnitts anstelle wenigstens einer Batterie.

Das aussteifende Zusatzbauteil ist bevorzugt durch Verschraubung mit den Längs- und/oder Querträgern verbunden. Hierfür können Verschraubungsstellen verwendet werden, die bei dem Kraftfahrzeug mit "Elektroantrieb" zur Anbindung wenigstens einer Batterie vorgesehen sind.

Die oben beschriebenen flächigen Verschlussbauteile leisten nur einen unerheblichen Beitrag zur Aussteifung der Rahmenabschnitte der beiden Bodenblech-Baugruppen. Die flächigen Verschlussbauteile sind aus Gründen der Abtrennung des Fahrzeuginnenraums vom Fahrzeugaußenraum (zumindest teilweise) auch bei der ersten Bodenblech-Baugruppe vorhanden.

Das wenigstens eine aussteifende Zusatzbauteil ist in demjenigen Rahmenabschnitt bzw. in denjenigen Rahmenabschnitten einer zweiten Bodenblech-Baugruppe angeordnet, der bzw. die nicht durch eine Batterie mit einem steifen Batteriegehäuse als tragendem Strukturbauteil ausgesteift ist bzw. sind. So ist ein aussteifendes Zusatzbauteil natürlich im Bereich eines nicht belegten Bauraums unterhalb der zweiten Bodenblech-Baugruppe erforderlich. Ebenso ist ein aussteifendes Zusatzbauteil beispielsweise im Bereich eines unterhalb der zweiten Bodenblech-Baugruppe angeordneten Kraftstoffbehälters oder eines Gehäuses zur Unterbringung von Komponenten des Kraftfahrzeugs erforderlich, da im Normalfall weder ein Kraftstoffbehälter noch ein derartiges Gehäuse eine ausreichende Struktursteifigkeit aufweisen.

Wie bereits oben erwähnt, ist ein weiteres Charakteristikum der beiden Bodenblech-Baugruppen, dass sie an ihren Anschlussbereichen zu einer Vorderwagen-Baugruppe und/oder einer Gepäckraumboden-Baugruppe einheitlich ausgebildet sind und somit den Anschluss einheitlicher Vorderwagen-Baugruppen und/oder einheitlicher Gepäckraumboden-Baugruppen ermöglichen.

Der oben geschilderte Kerngedanke einer grundsätzlich "angehobenen" Bodenblech-Baugruppe bei Kraftfahrzeugen mit allen drei Antriebskonzepten, auch bei den Kraftfahrzeugen mit "Verbrennungsantrieb", erfolgt in Anbetracht eines erwarteten zukünftig vergleichsweise niedrigen Anteils des "Verbrennungsantriebs" an den drei Antriebskonzepten bei einem Fahrzeugtyp. Somit kann für alle Kraftfahrzeuge eines Fahrzeugtyps, unabhängig vom Antriebskonzept, eine in ihrer Höhe einheitliche Bodenblech-Baugruppe eingesetzt werden, wodurch sich bei der Herstellung der Kraftfahrzeuge signifikante Einsparungspotentiale ergeben. Im Gegenzug kann in der Auslegung der Kraftfahrzeuge mit "Verbrennungsantrieb" akzeptiert werden, dass ein grundsätzlich vorhandener Bauraum unterhalb der Bodenblech-Baugruppe zugunsten einer in Hochrichtung Z des Kraftfahrzeugs größeren Fahrgastzelle nicht genutzt wird.

Damit können in einer neuartigen Fahrzeugarchitektur die unterschiedlichen Antriebskonzepte unter Einsatz einer minimalen Anzahl an Karosserie-Baugruppen dargestellt werden.

Durch die Erfindung kann zum einen unterhalb der Bodenblech-Baugruppe auch bei den Kraftfahrzeugen mit "Hybridantrieb" wenigstens eine Batterie angeordnet werden, die "flach" ausgebildet ist, also nach Art einer "Tafel", mit in Fahrzeuglängs- und in Fahrzeugquerrichtung deutlich größer Erstreckung als in Fahrzeughochrichtung. Damit unterscheiden sich die erfindungsgemäßen Kraftfahrzeuge von Kraftfahrzeugen mit "Hybridantrieb" nach dem Stand der Technik, bei denen die Batterie im begrenzten Einbauraum unter den Fondsitzen oder im Bereich des Gepäckraums untergebracht ist.

Zum anderen wird die Bodenblech-Baugruppe als Gleichteil auch bei den Kraftfahrzeugen mit "Verbrennungsantrieb" eingesetzt.

Die "angehobene" Bodenblech-Baugruppe kann so gestaltet sein, dass sie an ihrer Unterseite Batterien unterschiedlicher Größe und/oder unterschiedlicher Formgebung aufnehmen kann. Die Batterien können sich in der Größe äußerlich unterscheiden, durch entsprechend unterschiedlich große Abmessungen. Ebenso können sich "Batterien unterschiedlicher Größe" auch in ihrer Speicherkapazität, also in der Menge der entnehmbaren Ladung, unterscheiden.

Die beiden Bodenblech-Baugruppen sind "Gleichteile", unabhängig davon, bei welchem der dre unterschiedlichen Kraftfahrzeuge die jeweilige Bodenblech-Baugruppe verwendet wird. Kennzeichnend für diese "Gleichteile" ist, dass alle Exemplare der beiden Bodenblech-Baugruppen mit demselben Tiefziehwerkzeug bzw. mit demselben Satz von Tiefziehwerkzeugen hergestellt sind.

Im Rahmen der vorliegenden Erfindung gleichzusetzen mit "demselben Tiefziehwerkzeug" ist "dasselbe Gusswerkzeug", ebenso wie eine Kombination der beiden genannten Werkzeuge. Aus Gründen der sprachlichen Vereinfachung ist nachfolgend vorwiegend nur auf "Tiefziehwerkzeuge" Bezug genommen. Die Herstellung von Komponenten der Rohbaustruktur durch Tiefziehen ist die am häufigsten zur Anwendung kommende Herstellmethode.

Der Begriff "Gleichteil" umfasst also solche Komponenten für die Rohbaustruktur, die mit demselben Tiefziehwerkzeug hergestellt sind. Im Anschluss an die Herstellung im Presswerk können diese "Gleichteile" beispielsweise durch Verkürzen oder durch Verlängern in ihrer Längendimension verändert werden. Beim Verkürzen durch Ablängen wird beispielsweise ein Längsträger oder ein tiefgezogener flächiger Blechabschnitt, der für die Kraftfahrzeuge unterschiedlicher Antriebskonzepte übergreifend eingesetzt wird, je nach Antriebskonzept durch Beschnitt an einem seiner Endabschnitte verkürzt. Alternativ kann der Längsträger oder der Blechabschnitt auch durch Ansetzen eines Verlängerungsstücks je nach Antriebskonzept verlängert werden, durch Nieten, Schweißen, Schrauben, Kleben etc. Bei diesen Längenanpassungen, durch Ablängen (Beschnitt) oder durch Verlängern (Anstückeln) handelt es sich um Fertigungsschritte, die als nachträgliche Maßnahme an zuvor mit einem einheitlichen Tiefziehwerkzeug gefertigten "Gleichteilen" vorgenommen werden, so dass für diese nachträglichen Maßnahmen nur vergleichsweise geringe Arbeits- und Werkzeugkosten anfallen.

Tiefgezogene Blechbauteile sind beispielsweise Bodenblech, Längsträger etc. Das Blechmaterial kann entlang seiner Flächenerstreckung homogen sein oder zum Beispiel von einem so genannten "taylored blank" gebildet werden.

Auf die Bodenblech-Baugruppe bezogen ist eine "Skalierung" beispielsweise durch Beschnitt der Bodenblech-Baugruppe in Längsrichtung des Kraftfahrzeugs möglich, um unterschiedlich große Radstände zu realisieren.

Weiterhin umfasst der Begriff "Gleichteil" solche Rohbauteile, die mit demselben Gusswerkzeug hergestellt werden. Der Vorteil von Gussbauteilen liegt unter anderem in den vielfältigen Möglichkeiten der Integration von Funktionen, Anbauteilen, Verbindungsbereichen etc. Beispielsweise können Federbeinaufnahmen, Aufnahmen für Vorderachsträger oder vordere Längsträger (Motorträger) in vorteilhafter Weise von Gussbauteilen gebildet werden.

Grundsätzlich können als "Gleichteile" ausgeführten beiden Bodenblech-Baugruppen unterschiedliche Lochbilder für die Verbindung des "Gleichteils" mit der anschließenden Rohbaukarosserie und/oder mit Anbauteilen angebracht werden, durch Stanzen, Bohren etc. Maßgeblich ist jedoch für die "Gleichteile", dass nach der Herstellung in demselben Tiefziehwerkzeug keine wesentlichen weiteren formgebenden Veränderungen stattfinden. Insbesondere zeichnen sich Gleichteile durch einheitliche Anschlussbereiche zu benachbarten Baugruppen aus. Durch den Einsatz eines über die unterschiedlichen Antriebskonzepte übergreifend eingesetzten einheitlichen Tiefziehwerkzeugs werden die Investitionskosten für die Fertigungseinrichtungen maßgeblich reduziert. Unterschiedliche Lochbilder sind zum Beispiel bei der Herstellung von Kraftfahrzeugen in verschiedenen Länderausführungen als so genannte "Linkslenker" bzw. "Rechtslenker" oder unterschiedlichen Abgasanlagen erforderlich.

Weiterhin kann an den Gleichteilen eine Mehrzahl von Befestigungsstellen (vorzugsweise Verschraubungsstellen) vorgesehen sein, wobei zumindest ein Kraftfahrzeug mit einem bestimmten Antriebskonzept nur einen Teil der Befestigungsstellen in Anspruch nimmt.

Selbstverständlich können "Gleichteile" zumindest teilweise auch identische Bauteile sein.

Die Gleichteile können bei den einzelnen Kraftfahrzeugen oder Antriebskonzepten durch spezifische "Anpassungsteile" ergänzt werden, wie beispielsweise unterschiedliche spezifische Joche im Bodenbereich für die Aufnahme einer Abgasanlage oder unterschiedliche Konsolen an einem gleichen Vorderwagen- und/oder Stirnwandbereich.

Die Erfindung betrifft Kraftfahrzeug mit Frontantrieb oder mit Allradantrieb nach folgender Systematik: Die Vorderwagen-Baugruppe ist ausschließlich auf die Aufnahme eines quer eingebauten Verbrennungsmotors mit Antrieb der Vorderräder oder auf die Aufnahme eines Elektromotors, naturgemäß ebenfalls mit Antrieb der Vorderräder, ausgerichtet. Durch den Entfall der Option eines Längsmotors mit einem in eine Bodenblech-Baugruppe hineinragenden Getriebe und einer unter der Bodenblech-Baugruppe verlaufenden Antriebswelle zu einer angetriebenen Hinterachse können die oben erfindungsgemäß beschriebenen, als Gleichteile ausgeführten Bodenblech-Baugruppen zum Einsatz kommen. Diese erfindungsgemäßen Bodenblech-Baugruppen sind zwar im Vergleich zu einer Bodenblech-Baugruppe für ein Kraftfahrzeug mit "Verbrennungsantrieb" nach dem Stand der Technik höher angeordnet und schränken dadurch den zur Verfügung stehenden Raum in der Fahrgastzelle etwas ein, stellen jedoch andererseits einen Bauraum unterhalb der Bodenblech-Baugruppe zur Verfügung, der nahezu vollständig für die Unterbringung der Batterie(n) genutzt werden kann. Bei einer zum Fahrzeugheck führenden Abgasleitung ist im Bereich der Fahrzeugmitte ein Freiraum vorzuhalten, so dass bei dieser Bauart Batterien, Kraftstoffbehälter, Gehäuse für Komponenten des Kraftfahrzeugs etc. sich nicht über die gesamte Fahrzeugbreite erstrecken können, sondern beispielsweise nur mit der Breite einer Fahrzeughälfte ausgeführt sind.

Der Vorderradantrieb durch einen Verbrennungsmotor und/oder durch einen Elektromotor kann durch einen Elektromotor an der Hinterachse zu einem so genannten "straßengekoppelten Allradantrieb" ergänzt werden. Hieraus ergeben sich folgende mögliche Konstellationen:
- Vorderradantrieb ausschließlich durch einen Verbrennungsmotor ("Verbrennungsantrieb")
- Vorderradantrieb ausschließlich durch einen Elektromotor ("Elektroantrieb")
- Vorderradantrieb durch die Kombination eines Verbrennungsmotors mit einem Elektromotor, bevorzugt in Baueinheit, beispielsweise durch Integration des Elektromotors in ein an den Verbrennungsmotor angeflanschtes Getriebe ("Hybridantrieb")
- Allradantrieb mit einem Verbrennungsmotor zum Antrieb der Vorderräder und einem Elektromotor zum Antrieb der Hinterräder ("Hybridantrieb")
- Allradantrieb mit einer Kombination eines Verbrennungsmotors mit einem Elektromotor, bevorzugt in Baueinheit, beispielsweise durch Integration des Elektromotors in ein an den Verbrennungsmotor angeflanschtes Getriebe zum Antrieb der Vorderräder sowie mit einem Elektromotor zum Antrieb der Hinterräder ("Hybridantrieb")
- Allradantrieb mit einem Elektromotor zum Antrieb der Vorderräder und einem Elektromotor zum Antrieb der Hinterräder ("Elektroantrieb").

Selbstverständlich können anstelle eines einzelnen Elektromotors an der Vorderachse und/oder an der Hinterachse auch mehrere Elektromotore, bevorzugt zwei Elektromotore je Achse, vorgesehen sein, bevorzugt in Radnähe.

Die erfindungsgemäße Gruppe von Kraftfahrzeugen ist nicht dazu ausgelegt, Kraftfahrzeuge mit "Standardantrieb" abzubilden, also Kraftfahrzeuge mit längs eingebautem Frontmotor mit angeflanschtem Getriebe und Antrieb der Hinterräder über eine Antriebswelle, einschließlich der Erweiterung auf Allradantrieb über ein Verteilergetriebe für den Antrieb der Vorderräder.

Mit der erfindungsgemäßen Bauweise gehen zwar Kompromisse hinsichtlich des Package der Kraftfahrzeuge mit "Verbrennungsantrieb" einher. Dennoch kann es jedoch aus den oben aufgezeigten Überlegungen hinsichtlich der Anteile der einzelnen Antriebskonzepte bei einem Fahrzeugtyp aus wirtschaftlichen Gründen sinnvoll sein, die Anzahl der Bodenblech-Baugruppen auf zwei, als Gleichteile ausgeführte Bodenblech-Baugruppen zu reduzieren, (Szenario mit einem geringen Verkaufsanteil von Kraftfahrzeugen mit "Verbrennungsantrieb" innerhalb eines Fahrzeugtyps).

Insbesondere bei kleinem Hubraumvolumen des Verbrennungsmotors, zum Beispiel im Zuge eines "Downsizing" hinsichtlich Zylinderanzahl und/oder Leistung aufgrund verschärfter CO2-Bestimmungen, können in Querrichtung des Kraftfahrzeugs eingebaute Verbrennungsmotore zukünftig verstärkt zum Einsatz kommen.

Durch die Erfindung steht bei den Kraftfahrzeugen mit "Verbrennungsantrieb" an der Unterseite der ersten Bodenblech-Baugruppe ein Bauraum zur Anordnung eines Gehäuses für Komponenten des Kraftfahrzeugs zur Verfügung. In diesem Gehäuse können beispielsweise Komponenten untergebracht werden, die spezifisch für ein Kraftfahrzeug mit "Verbrennungsantrieb" sind, wie zum Beispiel ein SCR-Tank, ein Aktivkohlefilter, eine 48-Volt-Batterie, Komponenten der Luftversorgung etc.

Dem Gehäuse kommt also die Funktion einer "Modulwanne" zu. Anstelle der Unterbringung in einem Gehäuse können die Komponenten jedoch auch für sich, ohne Gehäuse oder an einem gemeinsamen Rahmen befestigt, an der Unterseite der Bodenblech-Baugruppe angeordnet sein.

In besonderer Weise ergeben sich Vorteile bei Kraftfahrzeugen mit "Hybridantrieb" oder mit "Verbrennungsantrieb", wenn ein in Querrichtung des Kraftfahrzeugs eingebauter Verbrennungsmotor mit einer im vorderen Bereich der Fahrgastzelle endenden Abgasanlage kombiniert wird. Bei einer derartigen Abgasanlage ist der wenigstens eine Endschalldämpfer im Bereich unter der Fahrgastzelle angeordnet, im vorderen Bereich der Bodenblech-Baugruppe. Damit steht im mittleren und/oder im hinteren Abschnitt des Kraftfahrzeugs mehr Bauraum unterhalb der Bodenblech-Baugruppe zur Verfügung, beispielsweise für die Unterbringung eines vergleichsweise großen Kraftstoffbehälters im Bereich des so genannten Fersenblechs. In dieser Konstellation kann bei einem Kraftfahrzeug mit "Hybridantrieb" eine einzige, über einen wesentlichen Teil der Fahrzeugbreite reichende Batterie vorgesehen werden, da weder eine Antriebswelle für die Hinterräder noch eine ins Fahrzeugheck reichende Abgasleitung vorhanden sind. In gleicher Weise kann bei dieser Konstellation bei einem Kraftfahrzeug mit "Verbrennungsantrieb" ein zusammenhängendes, über einen wesentlichen Teil der Fahrzeugbreite reichendes Gehäuse zum Einsatz kommen. Durch den Wegfall von Abgasleitung und Endschalldämpfer im Bereich der Gepäckraumboden-Baugruppe steht auch mehr Volumen im Gepäckraum und/oder unterhalb der Gepäckraumboden-Baugruppe zur Verfügung.

In Ausgestaltung der Erfindung ist wenigstens eine Gepäckraumboden-Baugruppe vorgesehen, deren vorderer Bereich zur Anbindung an den hinteren Bereich der als Gleichteile ausgebildeten Bodenblech-Baugruppen ausgebildet ist. Die wenigstens eine Gepäckraumboden-Baugruppe ist so gestaltet, dass in deren vorderem Bereich unterhalb der Gepäckraumboden-Baugruppe ausreichend Bauraum für die Aufnahme beispielsweise eines Elektromotors vorhanden ist.

Bevorzugt ist eine einheitliche Gepäckraumboden-Baugruppe vorgesehen.

Es ist jedoch ebenso möglich, zwei oder mehrere Gepäckraumboden-Baugruppen vorzusehen, jeweils unter der Maßgabe, dass der vordere Bereich der Gepäckraumboden-Baugruppen zur Anbindung an die Bodenblech-Baugruppen einheitlich gestaltet ist. Die gegebenenfalls unterschiedliche Ausgestaltung der Gepäckraumboden-Baugruppen kann zur Optimierung des nutzbaren Gepäckraumvolumens in deren mittlerem und/oder hinterem Bereich an das jeweilige Antriebskonzept des Kraftfahrzeugs angepasst sein, beispielsweise in Abhängigkeit davon, ob unterhalb der jeweiligen Gepäckraumboden-Baugruppe zum Beispiel ein Elektromotor (mit oder ohne Inverter), eine Abgasanlage (insbesondere ein Endschalldämpfer), ein Aktivkohlefilter, ein SCR-Tanks etc. angeordnet ist.

In einer vorteilhaften Ausführungsform der Erfindung ist sowohl bei den Kraftfahrzeugen mit "Verbrennungsantrieb" als auch bei den Kraftfahrzeugen mit "Hybridantrieb" der Kraftstoffbehälter einheitlich angeordnet, in einem Bereich vor der Hinterachse, im Bereich unter Rücksitzen des Kraftfahrzeugs sowie großflächig unter dem hinteren Teil der Bodenblech-Baugruppe. Bevorzugt ist bei den Kraftfahrzeugen mit diesen beiden Antriebskonzepten ein einheitliches Einfüllsystem für den Kraftstoff vorgesehen, mit zum Beispiel denselben Einfüllrohren.

Die Kraftstoffbehälter für die Kraftfahrzeuge mit "Verbrennungsantrieb" einerseits und mit "Hybridantrieb" andererseits sind jedoch grundsätzlich unterschiedlich ausgeführt. Bei Kraftfahrzeugen mit "Hybridantrieb" kommt es beim Fahren im rein elektrischen Modus und damit fehlender Entnahme von Kraftstoff zu einem Druckaufbau im Kraftstoffbehälter, der bei diesen Kraftfahrzeugen den Einsatz eines Drucktanks, bevorzugt aus Stahl, erforderlich macht.

Nachfolgend ist ein weiterer Aspekt der Erfindung erläutert, der darin besteht, dass für die Kraftfahrzeuge mit den unterschiedlichen Antriebskonzepten eine einheitliche "Karosserie" (also eine einheitliche Rohbaustruktur mit einheitlichen Außenhautbauteilen) eingesetzt werden kann. Um eine solche einheitliche Karosserie realisieren zu können, ist für alle Kraftfahrzeuge eines Fahrzeugtyps ein "Anheben" des Kraftfahrzeugs (ausgehend von einem konventionellen Kraftfahrzeug mit "Verbrennungsantrieb" oder einem Kraftfahrzeug mit "Hybridantrieb" nach dem Stand der Technik) erforderlich, neben weiteren Maßnahmen (wie Anpassen der "Silhouette", größere Räder etc.), die unten stehend näher erläutert sind.

Dieses "Anheben" ist nur bei "flachen" Kraftfahrzeugen, wie beispielsweise Limousinen, Kraftfahrzeugen der Kombinationsbauart, Coupés, Cabrios etc. technisch erforderlich. Bei "hohen" Kraftfahrzeug, also Kraftfahrzeugen, die eine vergleichsweise hohe Sitzanordnung haben, wie beispielsweise "Sport Utility Vehicles" SUV oder "Sport Activity Vehicles" SAV, kann ein "Anheben" gegebenenfalls entfallen.

Das "Anheben" der Bodenblech-Baugruppe stellt bei den Kraftfahrzeugen mit "Elektroantrieb" und bei den daraus abgeleiteten Kraftfahrzeugen mit "Hybridantrieb" sicher, dass bei den Kraftfahrzeugen mit diesen beiden Antriebskonzepten, die wenigstens eine an der Unterseite der Bodenblech-Baugruppe angeordnete Batterie aufweisen, eine ausreichende Bodenfreiheit gewährleistet ist. Bei ebenfalls von den Kraftfahrzeugen mit "Elektroantrieb" abgeleiteten Kraftfahrzeugen mit "Verbrennungsantrieb" ist dieses Anheben zwar technisch nicht erforderlich, wird jedoch erfindungsgemäß aus den oben beschriebenen wirtschaftlichen Überlegungen vorgenommen.

Diese ausreichende Bodenfreiheit wird unter anderem dadurch erreicht, dass die erfindungsgemäßen Kraftfahrzeuge aller drei Antriebskonzepte an der Vorder- und/oder an der Hinterachse "Radgrößen" (gemeint ist damit der Durchmesser einer Rad-/Reifenkombination) aufweisen, die gegenüber einem vergleichbaren Kraftfahrzeug mit (nur) einem "Verbrennungsantrieb" einen vergrößerten Durchmesser aufweisen. Hiermit wird neben dem "Anheben" der Bodenblech-Baugruppe auch der erforderlichen höheren Radlast bei den Kraftfahrzeugen mit "Elektroantrieb" und "Hybridantrieb" Rechnung getragen, die aufgrund des Gewichts der Batterie(n) erforderlich ist. Nebeneffekt hierbei ist allerdings, dass bei der erfindungsgemäßen Gruppe von Kraftfahrzeugen auch die Kraftfahrzeuge mit "Verbrennungsantrieb" größer dimensionierte Räder aufweisen, als dies aus rein technischen Gründen erforderlich wäre. Grund hierfür ist die Realisierung einer einheitlichen Außenhaut mit einheitlichen Radausschnitten und dazu "passenden" Rädern bei allen Kraftfahrzeugen der erfindungsgemäßen Gruppe von Kraftfahrzeugen, unabhängig vom Antriebskonzept.

Maßgeblich für die Erfindung ist, dass die beiden Bodenblech-Baugruppen jeweils einheitliche Anschlussbereiche ("Schnittstellen") an eine im Übrigen für alle drei Antriebskonzepte zumindest in Teilbereichen einheitliche Rohkarosserie aufweisen. Mit anderen Worten ausgedrückt, sind die Anschlussbereiche der beiden Bodenblech-Baugruppen so gestaltet, dass sie über alle drei Antriebskonzepte mit einem kommunalen Frontend (Vorderwagen-Baugruppe) und/oder einem kommunalen Heckend, auch als Hinterbau bezeichnet (Gepäckraumboden-Baugruppe) verbunden werden können. Beispielsweise sind die Anschlussbereiche der Bodenblech-Baugruppen zur Stirnwand und die Stirnwand selbst in der oben beschriebenen Weise gestaltet.

Mit diesem Konzept ist es möglich, die Rohkarosserien aller Kraftfahrzeugen der erfindungsgemäßen Gruppe von Kraftfahrzeugen mit einer einheitlichen Außenhaut zu versehen, also mit einheitlichen vorderen Seitenwänden ("Kotflügeln"), einheitlichen Seitenwänden mit einheitlichen Türausschnitten, einheitlicher Dachbeplankung, einheitlichen Türen und/oder einheitlichen vorderen bzw. hinteren Klappen.

In weiterer Detaillierung ist es im Sinn einer Vereinheitlichung der Außenhaut möglich, die Tankklappe für das Befüllen mit Kraftstoff bei den Kraftfahrzeugen mit "Verbrennungsantrieb" auch bei den Kraftfahrzeugen mit "Elektroantrieb" zu verwenden, als Ladeklappe für einen Elektrostecker. Ebenso ist es möglich, die Ladeklappe der Kraftfahrzeuge mit "Hybridantrieb" auch für die Kraftfahrzeuge mit "Elektroantrieb" zu nutzen, als zusätzliche Ladeklappe.

Die Kommunalität von Rohkarosserie und/oder Außenhaut setzt sich in vorteilhafter Weise auch in der Innenausstattung der Kraftfahrzeuge mit den drei Antriebskonzepten fort. So sind beispielsweise Sitze, Instrumententafelträger, Instrumententafel, Mittelkonsole und/oder Innenverkleidungen kommunal ausgeführt.

Ungeachtet der gegebenenfalls unterschiedlichen Ausgestaltung der beiden Gepäckraumboden-Baugruppen ist es beispielsweise möglich, die Verkleidungen im Inneren des Gepäckraums identisch zu gestalten, beispielsweise die seitlichen Verkleidungen.

Des Weiteren ist es vorteilhaft, wenn elektrische Komponenten (wie beispielsweise Lautsprecher, insbesondere Subwoofer, Verstärker, Stromverteiler, Heckklappen-Funktionsmodul, Anhängevorrichtung) der Kraftfahrzeuge wenigstens zweier, idealerweise aller drei, Antriebskonzepte gleich verortet sind oder zumindest die Kabelsteckpunkte für die einzelnen elektrischen Komponenten gleich sind.

Bevorzugt haben Anbauteile an die Rohkarosserie, wie zum Beispiel vordere und/oder hintere Stoßfänger, bei den Kraftfahrzeugen mit allen drei Antriebskonzepten die gleichen Schnittstellen für die Montage. Die Anbauteile selbst können geometrisch gleich oder geometrisch unterschiedlich sein. Unterschiedliche äußere Ausgestaltungen beispielsweise der hinteren Stoßfänger kommen bei einem Kraftfahrzeug mit "Elektroantrieb" in Frage, weil hier keine Abgasanlage mit einem großvolumigen Endschalldämpfer vorhanden ist. In analoger Weise können auch die vorderen Stoßfänger unterschiedlich gestaltet sein, entsprechend dem unterschiedlichen Kühlluftbedarf der Kraftfahrzeuge der einzelnen Antriebskonzepte. Selbstverständlich können die Stoßfänger auch aus Gründen des Designs unterschiedlich gestaltet sein, beispielsweise zur äußeren Differenzierung der Kraftfahrzeuge der einzelnen Antriebskonzepte.

Je nach Ausgestaltung der Gepäckraumboden-Baugruppe wird erreicht, dass der Gepäckraum der erfindungsgemäßen Kraftfahrzeuge mit "Hybridantrieb" nicht durch die Unterbringung einer Batterie oder eines Kraftstoffbehälters eingeschränkt wird. Somit bleibt auch bei Kraftfahrzeugen mit "Hybridantrieb" ein Gepäckraum erhalten, der hinsichtlich seiner Größe dem Gepäckraum von Kraftfahrzeugen mit "Verbrennungsantrieb" entspricht. Hierdurch kann das Antriebskonzept "Hybridantrieb" auch bei solchen Karosserievarianten von Kraftfahrzeugen realisiert werden, die für die Unterbringung einer Batterie oder eines Kraftstoffbehälters kein ausreichendes Gepäckraumvolumen und/oder keine geeignete geometrische Gestaltung des Gepäckraums aufweisen, wie beispielsweise Coupés oder Cabriolets.

Die Erfindung betrifft weiterhin ein Verfahren zur Herstellung einer Gruppe von Kraftfahrzeugen eines Fahrzeugtyps, wobei die Kraftfahrzeuge die drei unterschiedlichen Antriebskonzepte "Verbrennungsantrieb", "Elektroantrieb" und "Hybridantrieb" umfassen. Durch die Reduktion auf zwei Bodenblech-Baugruppen, die als Gleichteile ausgeführt sind und sich lediglich in der Aussteifung ihrer rahmenförmigen Struktur unterscheiden, wird die Anzahl der benötigten Tiefziehwerkzeuge reduziert. Entscheidend beim erfindungsgemäßen Verfahren ist, dass die beiden Bodenblech-Baugruppen mit einer einheitlichen Vorderwagen-Baugruppe korrespondieren, gegebenenfalls auch mit einer einheitlichen Gepäckraumboden-Baugruppe, zumindest mit Gepäckraumboden-Baugruppen, die einen zu den Bodenblech-Baugruppen einheitlichen Anschlussbereich aufweisen. Kerngedanke der Erfindung ist es also, sowohl für die Herstellung der Kraftfahrzeuge mit "Hybridantrieb" als auch der Kraftfahrzeuge mit "Verbrennungsantrieb" von der "Architektur" der Kraftfahrzeuge mit "Elektroantrieb" auszugehen.

Auch "innerhalb" eines der drei in Zusammenhang mit der vorliegenden Erfindung betrachteten Antriebskonzepte können unterschiedliche Komponenten der Abgasanlage und/oder unterschiedliche Kraftstoffbehälter und/oder unterschiedliche Elektromotore und/oder unterschiedliche Batterien zum Einsatz kommen, je nach "Motorisierungsvariante" (zum Beispiel Benzin- oder Dieselmotor, Motorleistung, Batteriekapazität) und/oder Antriebsart (Vorderradantrieb, Allradantrieb) des jeweiligen Kraftfahrzeugs. Selbstverständlich sind die beiden Bodenblech-Baugruppen und die beiden Gepäckraumboden-Baugruppen auf diese Varianten innerhalb eines Antriebskonzepts entsprechend auszulegen.

Die in Zusammenhang mit der vorliegenden Erfindung verwendeten Lagebezeichnungen "vorne" und "hinten", "oben" und "unten", "rechts" und "links" usw. sowie davon abgeleitete Begriffe beziehen sich auf die Einbaulage der betreffenden Bauteile im Kraftfahrzeug und auf die Fahrtrichtung des Kraftfahrzeugs bei Vorwärtsfahrt.

Die vorliegende Erfindung betrifft die Darstellung einer Architektur von Rohbaustrukturen für Kraftfahrzeuge mit den drei Antriebskonzepten "Verbrennungsantrieb", "Elektroantrieb" und "Hybridantrieb". Die Erfindung umfasst auch eine solche Gruppe von Kraftfahrzeugen eines Fahrzeugtyps mit drei unterschiedlichen Antriebskonzepten, bei der anstelle eines der drei oben genannten Antriebskonzepte das Antriebskonzept "Brennstoffzelle" vorgesehen ist, also ein elektromotorischer Antrieb mit einer mit Wasserstoff gespeisten Stromerzeugungseinheit.

Mögliche Ausführungsbeispiele von Kraftfahrzeugen einer erfindungsgemäßen Gruppe von Kraftfahrzeugen eines Fahrzeugtyps, mit den Antriebskonzepten "Elektroantrieb", "Hybridantrieb" und "Verbrennungsantrieb", sind in der Zeichnung dargestellt und werden nachfolgend näher erläutert.
- Fig. 1a: eine perspektivische Ansicht auf eine erste Bodenblech-Baugruppe von Kraftfahrzeugen einer erfindungsgemäßen Gruppe von Kraftfahrzeugen, unter Einbeziehung vorderer Längsträger einer Vorderwagen-Baugruppe,
- Fig. 1b: eine der Fig. 1a entsprechende Ansicht auf eine zweite Bodenblech-Baugruppe,
- Fig. 2a: eine Schnittdarstellung entlang der Schnittverlaufslinie I-I in Fig. 1a,
- Fig. 2b: eine Schnittdarstellung entlang der Schnittverlaufslinie II-II in Fig. 1b,
- Fig. 3: eine Schnittdarstellung entlang der Schnittverlaufslinie III-III in Fig. 1a,
- Fig. 4: eine perspektivische Ansicht auf den Antriebsstrang und die Energieversorgung eines Kraftfahrzeugs einer erfindungsgemäßen Gruppe von Kraftfahrzeugen, mit dem Antriebskonzept "Elektroantrieb",
- Fig. 5: eine der Fig. 4 entsprechende Ansicht auf ein Kraftfahrzeug mit "Verbrennungsantrieb" und
- Fig. 6 bis 8: der Fig. 4 entsprechende Ansichten auf Kraftfahrzeuge mit "Hybridantrieb".

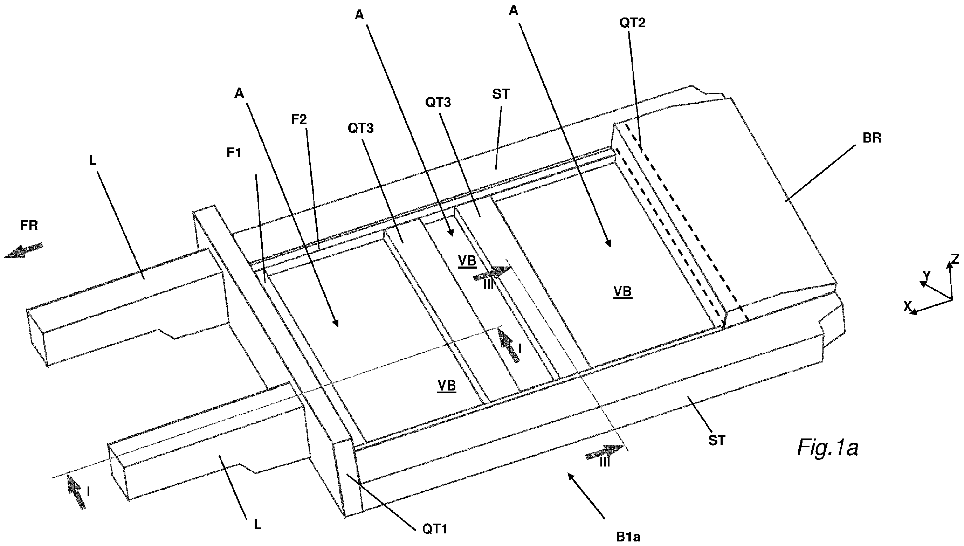

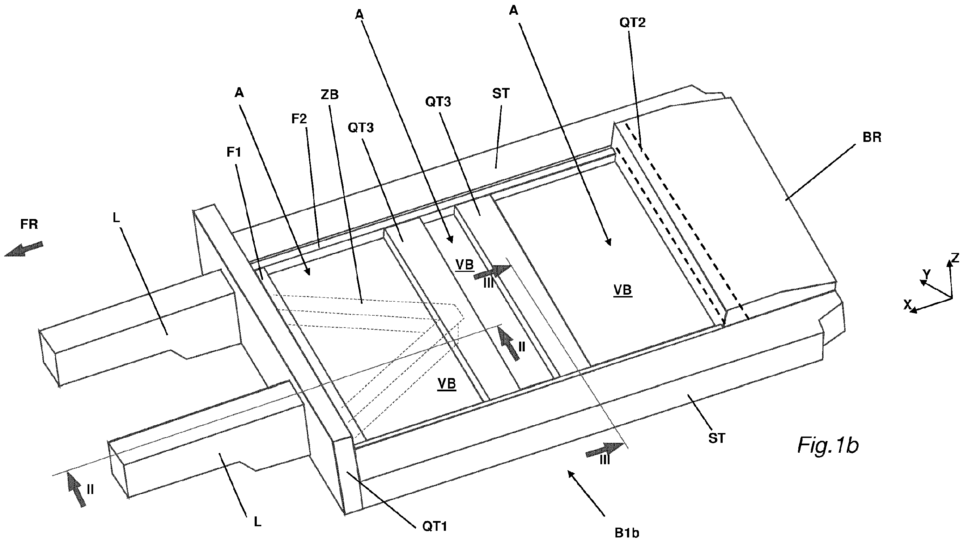

Das in den Fig. 1a und 1b eingezeichnete Koordinatensystem mit der Fahrzeuglängsrichtung X (entspricht der Fahrtrichtung FR), der Fahrzeugquerrichtung Y und der Fahrzeughochrichtung Z hat für alle Figuren Gültigkeit.

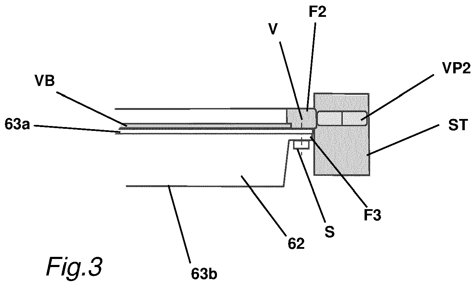

Die Fig. 1a und 1b sowie die Fig. 2 und 3 zeigen eine Bodenblech-Baugruppe B1a / B1b. Auf die Unterschiede zwischen den beiden Bodenblech-Baugruppen B1a und B1b wird unten stehend näher eingegangen.

### Den Bodenblech-Baugruppen B1a / B1b ist folgender Aufbau gemeinsam:

Die Bodenblech-Baugruppen B1a und B1b sind rahmenartig aufgebaut. Sie setzen sich aus zwei seitlichen Längsträgern ST, einem vorderen Querträger QT1, einem hinteren Querträger QT2 sowie wenigstens einem mittleren Querträger QT3 zusammen. Im vorliegenden Ausführungsbeispiel sind zwei mittlere Querträger QT3 vorgesehen. Der hintere Querträger QT2 ist von einem Einbauraum BR überdeckt. Die von den seitlichen Längsträgern ST und den Querträgern QT1 bis QT3 begrenzten Rahmenabschnitte sind mit A bezeichnet. Im vorliegenden Ausführungsbeispiel sind drei Rahmenabschnitte A gebildet.

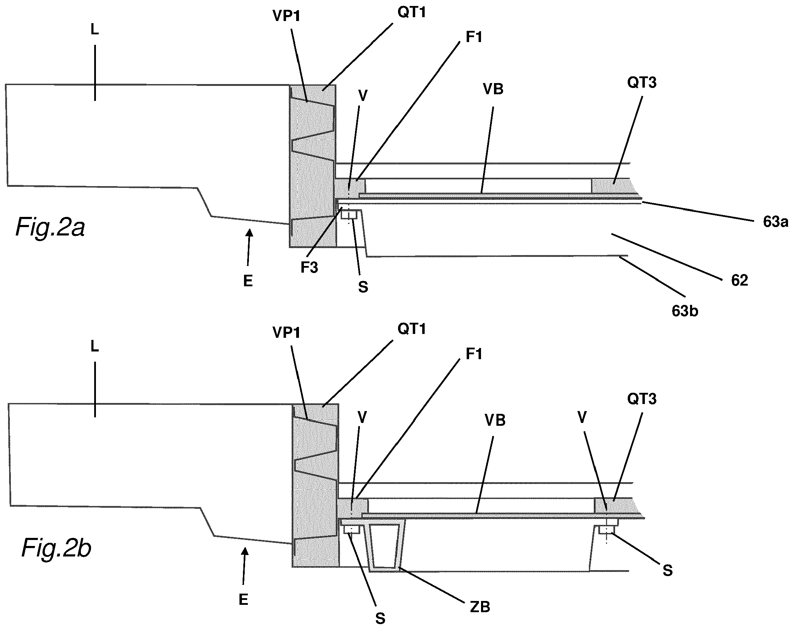

Dem vorderen Querträger QT1 kommt die Aufgabe zu, Kräfte aufzunehmen, die von einer Vorderwagen-Baugruppe VO1' über deren vordere Längsträger L in die Bodenblech-Baugruppe B1a / B1b eingeleitet werden. Wie insbesondere aus den Schnittdarstellungen der Fig. 2a und 2b hervorgeht, sind die Endabschnitte E der vorderen Längsträger L vergrößert, um eine großflächige Krafteinleitung in den vorderen Querträger QT1 zu gewährleisten und/oder einen Versatz zwischen vorderen Längsträgern L und dem vorderen Querträger QT1 in Hochrichtung Z und/oder in Querrichtung Y auszugleichen. In seinem Inneren ist der vordere Querträger QT1 durch ein Verstärkungsprofil VP1 ausgesteift.

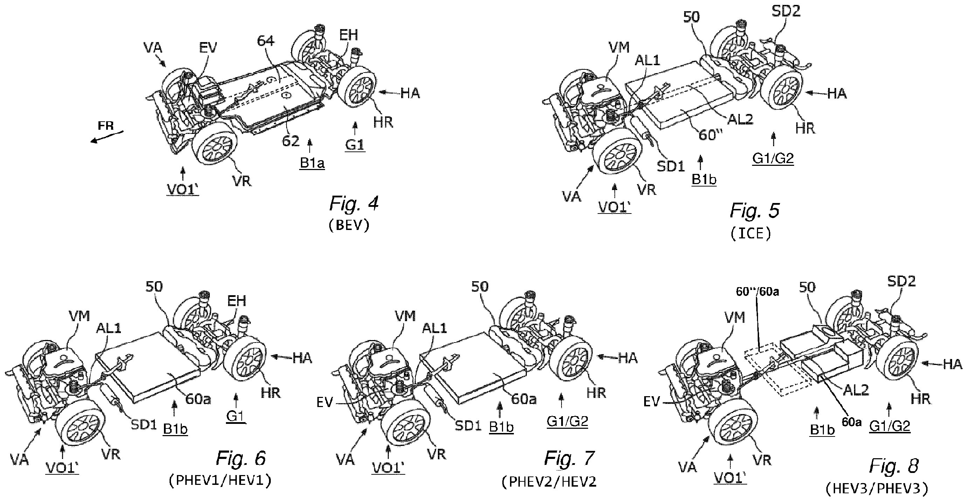

Der Bereich des vorderen Querträgers QT1 ist als einheitliche Schnittstelle zwischen der Bodenblech-Baugruppe B1a / B1b und einer davor angeordneten einheitlichen Vorderwagen-Baugruppe VO1' (siehe Fig. 4 bis 8) ausgebildet. Damit können die Bodenblech-Baugruppe B1a und die Bodenblech-Baugruppe B1b gleichermaßen mit der Vorderwagen-Baugruppe VO1' verbunden werden.

In gleicher Weise ist der Bereich des hinteren Querträgers QT2 ist als einheitliche Schnittstelle zwischen der Bodenblech-Baugruppe B1a / B1b und einer dahinter angeordneten Gepäckraumboden-Baugruppe G1 oder G2 (siehe Fig. 4 bis 8) ausgebildet. Damit können die Bodenblech-Baugruppe B1a die Bodenblech-Baugruppe B1b gleichermaßen mit entweder der Gepäckraumboden-Baugruppe G1 oder der Gepäckraumboden-Baugruppe G2 verbunden werden.

Die Fig. 1a und 1b zeigen im Bereich des hinteren Querträgers QT2 den schematisch quaderförmig dargestellten Einbauraum BR, in dem eine Batterie bzw. ein Abschnitt einer Batterie, ein Kraftstoffbehälter bzw. ein Abschnitt eines Kraftstoffbehälters und/oder in weiterer Erstreckung ein Elektromotor etc. angeordnet sein können.

Die seitlichen Längsträger ST sind naturgemäß Bestandteil der tragenden Struktur der Bodenblech-Baugruppe B1a / B1b und damit der Rohbaustruktur der Kraftfahrzeuge aus der erfindungsgemäßen Gruppe von Kraftfahrzeugen.

Die Fig. 1a, 2a und 3 stellen die Bodenblech-Baugruppe B1a für ein Kraftfahrzeug mit "Elektroantrieb" dar. Bei der Bodenblech-Baugruppe B1a sind die seitlichen Längsträger ST so ausgebildet, dass an der Unterseite eines Befestigungsflansches F2 wenigstens eine sich über nahezu die gesamte Unterseite der Bodenblech-Baugruppe B1a erstreckende Batterie 62 für ein Kraftfahrzeug mit "Elektroantrieb" befestigt werden kann. Der Befestigungsflansch F2 erstreckt sich über die gesamte Länge des seitlichen Längsträgers ST. Auf Höhe des Befestigungsflansches F2 ist im Inneren des seitlichen Längsträgers ST ein Verstärkungsprofil VP2 vorgesehen. Das Verstärkungsprofil VP2 wird im vorliegenden Ausführungsbeispiel von einem flach liegenden Zweikammerhohlprofil gebildet, beispielsweise von einem Strangprofil. Die seitlichen Längsträger ST sind bevorzugt Blechbauteile, können je nach Geometrie auch von Strangprofilen gebildet werden.

Durch den Verbund aus seitlichen Längsträgern ST mit innenliegendem Verstärkungsprofil VP2 und dem Befestigungsflansch F2 zur Anbindung der Batterie 62 wird eine äußerst stabile Einbindung der Batterie 62 in die Rohbaustruktur der Karosserie des Kraftfahrzeugs erreicht. Die seitlichen Längsträger ST sind in der Lage, bei einer seitlichen Kollision in hohem Maß Crashenergie abzubauen, wodurch ein sicherer Schutz der Batterie 62 "im Inneren" der seitlichen Längsträger ST erreicht wird.

Bevorzugt erfolgt die Verbindung zwischen dem Befestigungsflansch F2 der seitlichen Längsträger ST und einem Befestigungsflansch F3 der Batterie 62 durch Verschraubung (Schrauben S) an einer Mehrzahl von Verschraubungsstellen V. Zusätzlich kann die Anlagefläche zwischen der Oberseite des Befestigungsflansches F3 der Batterie 62 und der Unterseite des Befestigungsflansches F2 der seitlichen Längsträger ST für eine Verklebung genutzt werden.

In analoger Weise erfolgt die Befestigung der Batterie 62 an ihrem vorderen Endabschnitt, indem der vordere Befestigungsflansch F3 der Batterie 62 mit einem an der Rückseite des vorderen Querträgers QT1 angeordneten Befestigungsflansch F1 verschraubt ist, über Schrauben S an einer Mehrzahl von Verschraubungsstellen V.

Auch am hinteren Querträger QT2 sind nicht dargestellte Befestigungsflansche vorgesehen.

Der Befestigungsflansch F1 am vorderen Querträger QT1, die Befestigungsflansche F2 an den seitlichen Längsträgern ST und der Befestigungsflansch am hinteren Querträger QT2 bilden eine in einer horizontalen Ebene verlaufende ringförmige Verbindungsfläche. Auch die Unterseite der mittleren Querträger QT3 verläuft in dieser Ebene.

Durch diese umlaufende Anbindung ist die Batterie 62 nicht nur sicher in die Rohbaustruktur des Kraftfahrzeugs integriert. Vielmehr ist die Batterie 62 mit ihrem dreidimensionalen, wannenförmigen Gehäuse, einschließlich eines Deckels 63a, ein tragendes Strukturbauteil der Rohbaustruktur. Die Mehrzahl von Schrauben S, gegebenenfalls in Verbindung mit einer umlaufenden Verklebung, gewährleistet eine äußerst steife Einbindung der Batterie 62 in die Rohbaustruktur. Bevorzugt sind im Inneren der Batterie 62 Versteifungselemente vorgesehen, die den Deckel 63a der Batterie 62 mit ihrem Boden 63b verbinden und somit das Gehäuse der Batterie 62 aussteifen.

Die seitlichen Längsträger ST und die Querträger QT1, QT2 und QT3 bilden einen leiterförmigen Rahmen, der im vorliegenden Ausführungsbeispiel mit zwei mittleren Querträgern QT3 insgesamt drei Rahmenabschnitte A begrenzt. Diese ohne die unterhalb des Rahmens montierte Batterie 62 fensterartigen Öffnungen in den Rahmenabschnitten A werden durch flächige Verschlussbauteile VB verschlossen. Hierdurch wird eine hermetische Trennung zwischen dem Innenraum und dem Außenraum des Kraftfahrzeugs erreicht. Die vergleichsweise dünnen plattenförmigen Verschlussbauteile VB leisten jedoch keinen nennenswerten Beitrag zur Aussteifung der einzelnen Rahmenabschnitte A und damit des gesamten Rahmens der Bodenblech-Baugruppe B1a. Vielmehr hat das Gehäuse der Batterie 62 die Aufgabe, die rahmenförmige Bodenblech-Baugruppe B1a maßgeblich auszusteifen.

Hierbei ist es vorteilhaft, wenn die Lochbilder für die Verschraubungsstellen V so ausgebildet sind, dass sie für die Befestigung unterschiedlicher Batterien geeignet sind.

Die Fig. 1b und 2b stellen die Bodenblech-Baugruppe B1b für ein Kraftfahrzeug mit "Hybridantrieb" oder mit "Verbrennungsantrieb" dar. Die Bodenblech-Baugruppe B1b ist als Gleichteil zur Bodenblech-Baugruppe B1a ausgebildet. Der maßgebliche Unterschied zwischen den beiden Bodenblech-Baugruppen B1a und B1b besteht in wenigstens einem aussteifenden Zusatzbauteil ZB, das die Bodenblech-Baugruppe B1b als zusätzliches Bauteil aufweist.

Mit dem aussteifenden Zusatzbauteil ZB wird mindestens ein Rahmenausschnitt A ausgesteift, der nicht bereits durch eine Batterie ausgesteift ist. Beim vorliegenden Ausführungsbeispiel handelt es sich hierbei um den vorderen Rahmenabschnitt A. Dieser vordere Rahmenabschnitt A ist beispielsweise bei einem Kraftfahrzeug mit "Hybridantrieb" nicht mit einer Batterie belegt, da Batterien für Kraftfahrzeuge mit "Hybridantrieb" üblicherweise kleinere, nicht über die gesamte Längenerstreckung der Bodenblech-Baugruppe B1b reichende Batterien aufweisen. Kraftfahrzeuge mit "Verbrennungsantrieb" haben naturgemäß keine Batterie an der Unterseite der Bodenblech-Baugruppe B1b, die einen oder mehrere Rahmenausschnitte A aussteifen könnten.

Im vorliegenden Ausführungsbeispiel ist ein V-förmiges aussteifendes Zusatzbauteil ZB vorgesehen, das sich zwischen dem vorderen Querträger QT1 und dem vorne liegenden mittleren Querträger QT3 erstreckt. Hierbei sind die freien Endabschnitte der Schenkel des aussteifenden Zusatzbauteils ZB über Schrauben S am Befestigungsflansch F1 des vorderen Querträgers QT1 befestigt. Die Spitze des V-förmigen aussteifenden Zusatzbauteils ZB ist am Querträger QT3 ebenfalls mit wenigstens einer Schraube S festgelegt. Für die Verschraubung des aussteifenden Zusatzbauteils ZB wird zumindest ein Teil derjenigen Verschraubungsstellen V verwendet, die bei der Bodenblech-Baugruppe B1a für ein Kraftfahrzeug mit "Elektroantrieb" für die Verschraubung der großflächigen Batterie 62 verwendet wird.

Das aussteifende Zusatzbauteil ZB ist als strebenförmiges Hohlprofil mit einem annähernd rechteckförmigen Querschnitt ausgebildet. Es weist eine hohe Steifigkeit auf und bewirkt daher eine signifikante Aussteifung des vorderen Rahmenabschnitts A.

In den Fig. 1b und 2b ist beispielhaft die Aussteifung des vorderen Rahmenabschnitts A dargestellt. In entsprechender Weise könnte zum Beispiel auch der hintere Rahmenausschnitt A mit einem aussteifenden Zusatzbauteil ZB versehen sein, beispielsweise bei einem Kraftfahrzeug mit "Verbrennungsantrieb", das in diesem hinteren Bereich unterhalb der Bodenblech-Baugruppe B1b keine aussteifende Batterie hat.

Übergreifend für die beiden Bodenblech-Baugruppen B1a und B1b gilt, dass das Lochbild der Verschraubungsstellen auf die einzelnen zum Einsatz kommenden Batterien abgestimmt werden kann, wodurch innerhalb des Gleichteilkonzepts eine hohe Flexibilität erreicht wird. Es ist jedoch gleichermaßen auch möglich, unterschiedliche Batterien innerhalb eines Antriebskonzepts vorzusehen, die über ein einheitliches Lochbild für die Verschraubungsstellen V angebunden werden können. Insbesondere können die Verschraubungsstellen V entlang des Befestigungsflansches F2 an den seitlichen Längsträgern ST bei den Kraftfahrzeugen mit "Hybridantrieb" zur Befestigung unterschiedlich großer Batterien verwendet werden.

Neben den bislang ausschließlich erwähnten Batterien können bei den Kraftfahrzeugen mit "Verbrennungsantrieb", die keine großflächigen Batterien aufweisen, an der Unterseite der Bodenblech-Baugruppe B1b auch Kraftstoffbehälter, Gehäuse von Komponenten und/oder Komponenten selbst angeordnet sein. Beispielsweise können die Verschraubungsstellen V entlang des Befestigungsflansches F2 an den seitlichen Längsträgern ST bei den Kraftfahrzeugen mit "Verbrennungsantrieb" zur Befestigung eines oder mehrerer Gehäuse verwendet werden. Derartige Gehäuse sind in der Lage, den Bauraum, der aufgrund der Erfindung durch den Einsatz einer als Gleichteil ausgebildeten "angehobenen" Bodenblech-Baugruppe B1b auch bei Kraftfahrzeugen mit "Verbrennungsantrieb" zur Verfügung steht, für die Unterbringung von Komponenten zu nutzen. Selbstverständlich können die Komponenten auch ohne Gehäuse direkt im Freiraum an der Unterseite der Bodenblech-Baugruppe B1b angeordnet sein.

Zusätzlich oder alternativ zu den oben beschriebenen Verschraubungsstellen V mit ihrem einheitlichen Lochbild können für die Anbindung von Kraftstoffbehältern, Gehäusen, Komponenten und dergleichen separate Befestigungseinrichtungen vorgesehen sein, wie beispielsweise Befestigungswinkel.

Zusammenfassend ist festzustellen, dass die Bodenblech-Baugruppe B1a dadurch gekennzeichnet ist, dass alle Rahmenabschnitte A durch wenigstens eine großflächige Batterie 60 überdeckt sind. Maßgeblich ist hierbei, dass die wenigstens eine Batterie 60 hierbei die von den seitlichen Längsträgern ST und den Querträgern QT1 bis QT3 gebildeten Rahmen so aussteift, dass die Bodenblech-Baugruppe B1a ohne wesentliche weitere Versteifungsbauteile eine ausreichende Steifigkeit innerhalb der Rohbaustruktur erreicht. Mit anderen Worten ist die Batterie 60 Teil der tragenden Struktur des Kraftfahrzeugs. Durch die "mittragende" Batterie 60 kann auf separate Versteifungsbauteile verzichtet werden, mit Vorteilen hinsichtlich des Gewichts und der Herstellkosten für das Kraftfahrzeug.

Im Unterschied hierzu ist wenigstens ein Rahmenabschnitt A der Bodenblech-Baugruppe B1b mit einem eigens hierfür vorgesehenen aussteifenden Zusatzbauteil Z versehen. Das aussteifende Zusatzbauteil Z ist in den aus den seitlichen Längsträgern ST und den Querträgern QT1 bis QT3 gebildeten Rahmen eingesetzt. Bevorzugt erfolgt die Verbindung zwischen den aussteifenden Zusatzbauteilen Z und den seitlichen Längsträgern ST und/oder den Querträgern QT1 bis QT3 durch Verschraubung an zumindest einem Teil der Verschraubungsstellen V für die Batterie(n) 62 der ersten Bodenblech-Baugruppe B1a.

Die Fig. 4 bis 8 zeigen den grundsätzlichen Aufbau der Kraftfahrzeuge aus der erfindungsgemäßen Gruppe von Kraftfahrzeugen mit unterschiedlichen Antriebskonzepten, anhand perspektivischer Darstellungen des Fahrwerks und des Antriebssystems, unter Weglassung der Komponenten der Karosserie und der Ausstattung. Jedes der Kraftfahrzeuge gemäß den Fig. 4 bis 8 weist einen Antriebsstrang mit einer Vorderachse VA und einer Hinterachse HA auf, mit Vorder- und Hinterrädern VR bzw. HR.

Die Rohbaustruktur der Kraftfahrzeuge gemäß den Fig. 4 bis 8 setzen sich jeweils aus einer Vorderwagen-Baugruppe VO1', einer Bodenblech-Baugruppe B1a bzw. B1b und einer Gepäckraumboden-Baugruppe G1 bzw G2 zusammen. Anstelle unterschiedlicher Gepäckraumboden-Baugruppen G1 bzw. G2 kann auch eine einheitliche Gepäckraumboden-Baugruppe vorgesehen sein. Die genannten drei Baugruppen selbst sind in den Fig. 4 bis 8 nicht dargestellt, um die Komponenten des Fahrwerks und des Antriebssystems anschaulicher darstellen zu können.

Maßgeblich im Zusammenspiel der drei Baugruppen ist, dass die Vorderwagen-Baugruppe VO1' an ihrem hinteren Endabschnitt und die beiden Bodenblech-Baugruppen B1a und B1b an ihren vorderen Endabschnitten so gestaltet ist, dass die Vorderwagen-Baugruppe VO1' gleichermaßen mit jeder der beiden Bodenblech-Baugruppen B1a und B1b verbindbar ist. Zusätzlich können die Gepäckraumboden-Baugruppen G1 und G2 an ihren vorderen Endabschnitten so gestaltet sein, dass sie mit entsprechend gestalteten einheitlichen hinteren Endabschnitten der beiden Bodenblech-Baugruppen B1a und B1b gleichermaßen verbindbar sind.

Die Vorderwagen-Baugruppe VO1' trägt die Komponenten der Vorderachse VA und der Lenkung. Die Vorderwagen-Baugruppe VO1' ist gleichermaßen zur Aufnahme eines Elektromotors EV und eines quer zur Fahrtrichtung FR angeordneten Verbrennungsmotors VM (Quermotor) ausgestaltet. Außerdem sind an der Vorderwagen-Baugruppe VO1' beispielsweise folgende Komponenten verortet: Bauteile zur Temperierung von Antriebsaggregaten und/oder Batterien, Heiz- oder Klimaanlage, elektrische und/oder elektronische Komponenten, Wischanlage, Waschwasserbehälter, Ansauggeräuschdämpfer (nur für Kraftfahrzeuge mit "Verbrennungsantrieb" und mit "Hybridantrieb") etc.

Die beiden Bodenblech-Baugruppen B1a und B1b sind als rahmenartige Gleichteile ausgeführt und unterscheiden sich maßgeblich lediglich in der Art der Aussteifung der Rahmenabschnitte A.

Die Bodenblech-Baugruppe B1a ist den Kraftfahrzeugen mit dem Antriebskonzept "Elektroantrieb" zugeordnet. Sie bietet an ihrer einer Fahrbahn zuweisenden Unterseite ausreichend Bauraum für die Anordnung einer Batterie 62, die nahezu die gesamte Fläche unter der Bodenblech-Baugruppe B1a einnimmt. Anstelle einer Batterie 62 können auch zwei oder mehrere Batterien 62 nahezu den gesamten Bauraum unter der Bodenblech-Baugruppe B1a einnehmen. Maßgeblich ist hierbei, dass die Batterie 62 (bzw. die Batterien 62) mit der rahmenartigen Bodenblech-Baugruppe B1a derart verbunden ist (bzw. sind), dass alleine die Batterie 62 (bzw. die Batterien 62) die maßgebliche Aussteifung der Rahmenabschnitte bewirkt (bzw. bewirken). Mit anderen Worten ist an der Bodenblech-Baugruppe B1a kein zusätzliches der Aussteifung dienendes Bauteil vorgesehen, da die Aufgabe der Aussteifung der Rahmenabschnitte ausschließlich und maßgeblich von der Batterie 62 (bzw. den Batterien 62) übernommen wird.

Die Bodenblech-Baugruppe B1b ist den Kraftfahrzeugen mit dem Antriebskonzept "Hybridantrieb" oder "Verbrennungsantrieb" zugeordnet. Sie bietet an ihrer einer Fahrbahn zuweisenden Unterseite Bauraum für die Anordnung einer Batterie 60a (bzw. mehrerer Batterien 60a), die eine Teilfläche unter der Bodenblech-Baugruppe B1b einnimmt. Zusätzlich ist an der Unterseite der Bodenblech-Baugruppe B1b zumindest ein Abschnitt eines Kraftstoffbehälters 50 angeordnet.

Die Gepäckraumboden-Baugruppen G1 und G2 überdecken den Bereich einer Hinterachse HA und bilden die Unterseite eines Gepäckraums. Sofern unterschiedliche Gepäckraumboden-Baugruppen G1 und G2 vorgesehen sind, verläuft die Gepäckraumboden-Baugruppe G1 in ihrem vorderen Bereich höher als die Gepäckraumboden-Baugruppe G2. Der hintere Bereich der Gepäckraumboden-Baugruppe G1 hat einen im Vergleich zur Gepäckraumboden-Baugruppe G2 tiefer angeordneten Abschnitt.

Nachfolgend werden die einzelnen Kraftfahrzeuge gemäß den Fig. 4 bis 8 aus einer erfindungsgemäßen Gruppe von Kraftfahrzeugen eines Fahrzeugtyps im Detail beschrieben.

Fig. 4 zeigt ein Kraftfahrzeug mit "Elektroantrieb" aus der erfindungsgemäßen Gruppe von Kraftfahrzeugen. Es hat die Kurzbezeichnung "BEV". Die Rohbaustruktur des Kraftfahrzeugs gemäß Fig. 4 setzt sich aus der Vorderwagen-Baugruppe VO1', der Bodenblech-Baugruppe B1a und der Gepäckraumboden-Baugruppe G1 zusammen.

Die Vorderwagen-Baugruppe VO1' nimmt neben einem Elektromotor EV weitere Komponenten auf, wie zum Beispiel Bauteile zur Temperierung des Elektromotors EV und/oder der Batterie 62, Heiz- oder Klimaanlage, elektrische und/oder elektronische Komponenten, Wischanlage, Waschwasserbehälter etc.

Die Bodenblech-Baugruppe B1a nimmt an ihrer einer Fahrbahn zuweisenden Unterseite eine Batterie 62 auf, die einstückig ausgebildet ist und sich über nahezu die gesamte Breite des Kraftfahrzeugs erstreckt. Die Batterie 62 hat gegebenenfalls in ihrem Mittenbereich eine Ausbauchung 64 (mit gestrichelten Linien gezeichnet), wodurch in diesem Bereich Komponenten wie zum Beispiel elektrische Leitungen und/oder Kühlmittelleitungen untergebracht werden können. Sollte an der Batterie 62 eine Ausbauchung 64 vorgesehen sein, so sind die mittleren Querträger QT3 entsprechend der ausbauchenden Form der Batterie 62 zu gestalten.

Die Gepäckraumboden-Baugruppe G1 überdeckt einen im Bereich der Hinterachse HA angeordneten Elektromotor EV. Demzufolge bietet die Gepäckraumboden-Baugruppe G1 in ihrem vorderen, vergleichsweise hoch angeordneten Bereich oberseitig ein etwas reduziertes Gepäckraumvolumen. In ihrem hinteren Bereich weist die Gepäckraumboden-Baugruppe G1 jedoch einen vergleichsweise tief angeordneten Abschnitt auf, der hier eine große Beladehöhe im Gepäckraum ermöglicht.

Durch den Elektromotor EV zum Antrieb der Vorderräder VR und dem Elektromotor EV zum Antrieb der Hinterräder HR wird ein so genannte "straßengekoppelten Allradantrieb" realisiert.

Fig. 5 zeigt ein Kraftfahrzeug mit "Verbrennungsantrieb" aus der erfindungsgemäßen Gruppe von Kraftfahrzeugen. Es hat die Kurzbezeichnung "ICE". Die Rohbaustruktur des Kraftfahrzeugs gemäß Fig. 5 setzt sich aus der Vorderwagen-Baugruppe VO1', der Bodenblech-Baugruppe B1b und der Gepäckraumboden-Baugruppe G1 oder G2 zusammen.

Die Vorderwagen-Baugruppe VO1' nimmt einen Verbrennungsmotor VM auf. Der Verbrennungsmotor VM ist in Querrichtung des Kraftfahrzeugs eingebaut und treibt über ein Getriebe und Gelenkwellen die Vorderräder VR an. Daneben sind an der Vorderwagen-Baugruppe VO1' weitere Komponenten angeordnet, wie bereits oben erwähnt.

Die Bodenblech-Baugruppe B1b stellt an ihrer Unterseite einen Bauraum zur Verfügung, der bei einem Kraftfahrzeug mit "Verbrennungsantrieb" nach dem Stand der Technik nicht vorhanden ist. In diesem Bauraum kann wenigstens ein Gehäuse 60" zur Unterbringung von Komponenten des Kraftfahrzeugs angeordnet werden. Das wenigstens eine Gehäuse 60" kann auch entfallen, sofern kein Bedarf für die Unterbringung von Komponenten des Kraftfahrzeugs in einem Gehäuse 60" besteht. In diesem Fall ist der Bereich unterhalb der Bodenblech-Baugruppe B1b ungenutzt. Alternativ können im Bereich unterhalb der Bodenblech-Baugruppe B1b auch Komponenten des Kraftfahrzeugs an sich, ohne Gehäuse 60", angeordnet sein. Ein Kraftstoffbehälter 50 ist im Bereich vor der Hinterachse HA, unterhalb von Rücksitzen des Kraftfahrzeugs, angeordnet.

Die Möglichkeiten der Nutzung des Bauraums an der Unterseite der Bodenblech-Baugruppe B1b hängen auch von den in Fig. 5 dargestellten beiden Varianten von Abgasanlagen für den Verbrennungsmotor VM ab.

In einer ersten Ausführungsform des Kraftfahrzeugs gemäß Fig. 5 endet die Abgasanlage im vorderen Bereich der Fahrgastzelle und hat eine vergleichsweise kurze Abgasleitung AL1 sowie einen Endschalldämpfer SD1, dessen Abgasendrohr im Bereich des seitlichen Längsträgers (Schwellers) angeordnet ist. Durch den Entfall einer bis zum Fahrzeugheck reichenden Abgasanlage steht der Bereich unterhalb der Bodenblech-Baugruppe B1b in seiner ganzen Breite zur Unterbringung von Komponenten zur Verfügung. Wie in Fig. 5 beispielhaft dargestellt, kann somit ein einziges, über nahezu die gesamte Fahrzeugbreite reichendes Gehäuse 60" angeordnet werden.

In einer zweiten Ausführungsform des Kraftfahrzeugs gemäß Fig. 5 ist die Abgasanlage bis zum Heck des Kraftfahrzeugs geführt, mit einer mit gestrichelten Linien dargestellten Abgasleitung AL2 zu einem im Heck des Kraftfahrzeugs angeordneten Endschalldämpfer SD2. Der von der Abgasleitung AL2 beanspruchte Bauraum in der Mitte der Bodenblech-Baugruppe B1b verhindert die Unterbringung eines über die Fahrzeugbreite reichenden Gehäuses 60". Bei dieser Ausführungsform können an der Unterseite der Bodenblech-Baugruppe B1b beispielsweise zwei separate Gehäuse 60" angeordnet werden.

Wie bereits in Zusammenhang mit Fig. 4 beschrieben, hat die Gepäckraumboden-Baugruppe G1 einen vorderen, vergleichsweise hoch angeordneten Bereich und in ihrem hinteren Bereich einen vergleichsweise tief angeordneten Abschnitt auf. Somit kann die Gepäckraumboden-Baugruppe G1 bei dem in Fig. 5 dargestellten Kraftfahrzeug nur in Verbindung mit der ersten Variante der Abgasanlage eingesetzt werden, ohne Endschalldämpfer SD2 im Fahrzeugheck. Bei der zweiten Variante der Abgasanlage, mit einem Endschalldämpfer SD2 im Fahrzeugheck, kommt die Gepäckraumboden-Baugruppe G2 zum Einsatz, die in ihrem hinteren Bereich höher verläuft als die Gepäckraumboden-Baugruppe G1 und somit an ihrer Unterseite den Endschalldämpfer SD2 aufnehmen kann. Die Gepäckraumboden-Baugruppe G2 ist mit ihrem tiefer angeordneten vorderen Bereich auf den Platzbedarf "nur" der Hinterachse HA, ohne einen Elektromotor EH, abgestimmt.

Fig. 6 zeigt ein erstes Kraftfahrzeug mit "Hybridantrieb" aus der erfindungsgemäßen Gruppe von Kraftfahrzeugen. Es hat die Kurzbezeichnung "PHEV1 / HEV1" (mit bzw. ohne Möglichkeit, die Batterie des Kraftfahrzeugs mit elektrischer Energie von außerhalb des Kraftfahrzeugs laden zu können). Die Rohbaustruktur des Kraftfahrzeugs gemäß Fig. 6 setzt sich aus der Vorderwagen-Baugruppe VO1', der Bodenblech-Baugruppe B1b und der Gepäckraumboden-Baugruppe G1 zusammen.

Wie beim Kraftfahrzeug gemäß Fig. 4 nimmt die Vorderwagen-Baugruppe VO1' einen als Quermotor ausgebildeten Verbrennungsmotor VM auf, der die Vorderräder VR antreibt. Der Verbrennungsmotor VM hat im vorliegenden Ausführungsbeispiel eine "kurze" Abgasanlage mit einer Abgasleitung AL1 und einem Endschalldämpfer SD1. Somit wird der Bauraum unter der Bodenblech-Baugruppe B1b weder durch eine Antriebswelle zu den Hinterrädern HR noch durch eine ins Fahrzeugheck reichende Abgasanlage eingeschränkt. Demzufolge kann der Bauraum unter der Bodenblech-Baugruppe B1b in seiner ganzen Breite für die Anordnung einer Batterie 60a beansprucht werden. Die Batterie 60a erstreckt sich jedoch nicht über die gesamte Länge der Bodenblech-Baugruppe B1b, sondern lediglich etwa die beiden hinteren Drittel. Im Bereich vor der Hinterachse HA ist ein Kraftstoffbehälter 50 vorgesehen.

Die Hinterräder HR des Kraftfahrzeugs gemäß Fig. 6 werden über einen im Bereich der Hinterachse HA angeordneten zweiten Elektromotor EH angetrieben ("Straßen gekoppelter Allradantrieb"). Die Gepäckraumboden-Baugruppe G1 stellt mit ihrem vorderseitig höher liegenden Abschnitt den für den Elektromotor EH erforderlichen Bauraum unterhalb des vorderen Bereichs der Gepäckraumboden-Baugruppe G1 zur Verfügung.

Fig. 7 zeigt ein zweites Kraftfahrzeug mit "Hybridantrieb" aus der erfindungsgemäßen Gruppe von Kraftfahrzeugen. Es hat die Kurzbezeichnung "PHEV2 / HEV2". Die Rohbaustruktur des Kraftfahrzeugs gemäß Fig. 7 setzt sich aus der Vorderwagen-Baugruppe VO1', der Bodenblech-Baugruppe B1b und der Gepäckraumboden-Baugruppe G1 oder G2 zusammen.

Das Kraftfahrzeug gemäß Fig. 7 hat anstelle des Elektromotors EH des Kraftfahrzeugs gemäß Fig. 6 einen Elektromotor EV im Bereich der Vorderachse VA. Der Elektromotor EV ist bevorzugt in ein an den Verbrennungsmotor VM angeflanschtes Getriebe integriert. Somit treiben sowohl der Verbrennungsmotor VM als auch der Elektromotor EV die Vorderräder VR an. Durch den Entfall des Elektromotors EH kann die in ihrem vorderen Bereich tiefer verlaufende Gepäckraumboden-Baugruppe G2 vorgesehen sein.

Selbstverständlich kann stattdessen die Gepäckraumboden-Baugruppe G1 eingesetzt werden.

Grundsätzlich kann anstelle der Gepäckraumboden-Baugruppen G1 und G2 eine auf die Einbausituation beim Kraftfahrzeug gemäß Fig. 7 hin optimierte dritte Gepäckraumboden-Baugruppe eingesetzt werden, die sowohl an ihrem vorderen als auch an ihrem hinteren Endbereich tiefer verläuft als die jeweiligen Endabschnitte der Gepäckraumboden-Baugruppen G1 und G2 und somit ein größeres Gepäckraumvolumen ermöglicht, was jedoch mit zusätzlichen Kosten verbunden ist.

Im Übrigen entspricht das Kraftfahrzeug gemäß Fig. 7 dem Kraftfahrzeug gemäß Fig. 6.

Bei den Kraftfahrzeugen gemäß den Fig. 6 und 7 sind Kraftstoffbehälter 50 und Batterie 60, in Fahrtrichtung FR betrachtet, "hintereinander" angeordnet. Wegen der über die ganze Fahrzeugbreite reichenden Batterie 60a ist diese Ausführung nur bei Kraftfahrzeugen mit einer "kurzen" Abgasanlage möglich.

Alternativ kann sich bei den Kraftfahrzeugen gemäß den Fig. 6 und 7 der Kraftstoffbehälter 50 auch in einen Bereich hineinerstrecken, der vom hinteren Drittel der Bodenblech-Baugruppe B1b überdeckt wird, in Zusammenspiel mit einer Batterie 60a, die nur das mittlere Drittel unterhalb der Bodenblech-Baugruppe B1b als Bauraum verwendet. Ein derartiger Kraftstoffbehälter 50 ist in seinem Bereich unterhalb der Bodenblech-Baugruppe B1b nach Art einer flachen Tafel ausgebildet. Nach hinten schließt sich an diesen flachen Abschnitt des Kraftstoffbehälters 50 eine Erweiterung nach oben an, entsprechend dem vor der Hinterachse HA und unterhalb von Rücksitzen des Kraftfahrzeugs zur Verfügung stehenden Bauraum (wie in den Fig. 6 und 7 grundsätzlich dargestellt). Ein derartig ausgebildeter Kraftstoffbehälter 50 ist in Fig. 8 dargestellt, allerdings mit einer Breite, die nur etwa der halben Breite der Bodenblech-Baugruppe B1b entspricht.

Mit dieser in den Fig. 6 und 7 nicht dargestellten Ausführungsform, bei der der "verlängerte" Kraftstoffbehälter 50 und die Batterie 60a, in Fahrtrichtung FR betrachtet, "hintereinander" angeordnet sind, wird ein vergleichsweise großer Kraftstoffbehälter 50 ermöglicht.

Fig. 8 zeigt ein drittes Kraftfahrzeug mit "Hybridantrieb" aus der erfindungsgemäßen Gruppe von Kraftfahrzeugen. Es hat die Kurzbezeichnung "PHEV3 / HEV3". Die Rohbaustruktur des Kraftfahrzeugs gemäß Fig. 8 setzt sich aus der Vorderwagen-Baugruppe VO1', der Bodenblech-Baugruppe B1b und der Gepäckraumboden-Baugruppe G1 oder G2 zusammen.

Fahrwerk und Antriebsstrang des Kraftfahrzeugs gemäß Fig. 8 entsprechen vollständig dem Kraftfahrzeug gemäß Fig. 7.

Im Unterschied zum Kraftfahrzeug gemäß Fig. 7 sind beim Kraftfahrzeug gemäß Fig. 8 die Batterie 60a und der Kraftstoffbehälter 50, in Fahrtrichtung FR betrachtet, "nebeneinander" angeordnet, also rechts und links einer Längsmittenebene der Bodenblech-Baugruppe B1b. Hierbei erstrecken sich sowohl der Kraftstoffbehälter 50 als auch die Batterie 60a über den flachen Bereich der Bodenblech-Baugruppe B1b nach hinten hinaus in den Bereich der Hinterachse HA und unterhalb von Rücksitzen des Kraftfahrzeugs. In diesem hinteren Bereich steht ein deutlich höherer Bauraum zur Verfügung. Somit kann hier einerseits eine größere Anzahl von Batteriezellen untergebracht werden. Andererseits ist die größere Bauhöhe insbesondere für den Kraftstoffbehälter 50 von Vorteil, hinsichtlich des Schwallverhaltens und der Sicherstellung der Kraftstoffversorgung auch bei geringem Füllgrad des Kraftstoffbehälters 50.

Bei der "parallelen" Anordnung von Kraftstoffbehälter 50 und Batterie 60a gemäß Fig. 8 nehmen Kraftstoffbehälter 50 und Batterie 60a bevorzugt nur etwa das hintere Drittel oder die hintere Hälfte der Längserstreckung der Bodenblech-Baugruppe B1b als Bauraum in Anspruch. Einer Verlängerung des Kraftstoffbehälters 50 nach vorne stehen Nachteile wegen der geringen Bauhöhe entgegen, vor allem hinsichtlich der sicheren Nutzbarmachung eines geringen Restvolumens im Kraftstoffbehälter 50.

Hinsichtlich der Längserstreckung der Batterie 60 in Richtung des vorderen Endabschnitts der Bodenblech-Baugruppe B1b gibt es im Unterschied zu den beim Kraftstoffbehälter 50 geschilderten Nachteilen grundsätzlich keine Einschränkungen. Möglicherweise ist es bei einem Kraftfahrzeug mit dem Antriebskonzept "Hybridantrieb" jedoch nicht erforderlich, eine entsprechend große (und damit schwere und teure) Batterie einzusetzen.

Die "parallele" Anordnung von Kraftstoffbehälter 50 und Batterie 60a gemäß Fig. 8 ermöglicht den Einsatz einer bis zum Fahrzeugheck führenden Abgasanlage, mit einer im Bereich der Fahrzeugmitte verlaufenden Abgasleitung AL2 und einem im Heck des Kraftfahrzeugs angeordneten Endschalldämpfer SD2. Der von der Abgasleitung AL2 benötigte Bauraum in der Mitte der Bodenblech-Baugruppe B1b wird durch einen Freiraum zwischen dem Kraftstoffbehälter 50 und der Batterie 60a bereitgestellt. In diesem Fall eines im Fahrzeugheck angeordneten Endschalldämpfers SD2 kann ausschließlich die in ihrem hinteren Bereich angehobene Gepäckraumboden-Baugruppe G2 zum Einsatz kommen. Andernfalls kann auch die Gepäckraumboden-Baugruppe G1 eingesetzt werden.

Bauraum, der bei der "parallelen" Anordnung von Kraftstoffbehälter 50 und Batterie 60a gemäß Fig. 8 unterhalb des vorderen Bereichs der Bodenblech-Baugruppe B1b zur Verfügung steht, weil in diesem vorderen Abschnitt kein Kraftstoffbehälter 50 und/oder keine Batterie 60a verbaut ist, kann durch andere Einbauten genutzt werden, wie beispielsweise durch ein Gehäuse 60" für Komponenten des Kraftfahrzeugs oder durch "frei" am Unterboden verbaute Komponenten.

In Fig. 8 ist exemplarisch mit gestrichelten Linien dargestellt, wie der Bauraum vor den "parallel" angeordneten Komponenten Kraftstoffbehälter 50 und Batterie 60a durch ein Gehäuse 60" und/oder durch eine weitere Batterie 60a genutzt werden kann. Ebenso kann dieser Bauraum mit Komponenten des Kraftfahrzeugs belegt werden, die ohne Gehäuse direkt am Unterboden angeordnet sind. Der gestrichelt dargestellte Bauraum kann sich über die gesamte Breite der Bodenblech-Baugruppe B1b erstrecken (bei einer "kurzen" Abgasanlage) oder bei einer bis ins Fahrzeugheck reichenden Abgasanlage (wie in Fig. 8 dargestellt) zweigeteilt sein.

Die Erfindung lässt sich wie folgt zusammenfassen: Kerngedanke der Erfindung ist es, bei einer Gruppe von Kraftfahrzeugen eines Fahrzeugtyps mit drei unterschiedlichen Antriebskonzepten ("Verbrennungsantrieb", "Elektroantrieb" oder "Hybridantrieb") für die Darstellung der Kraftfahrzeuge aller drei Antriebskonzepte von der "Architektur" der Kraftfahrzeuge mit "Elektroantrieb" auszugehen. Hierbei wird unabhängig vom Antriebskonzept eine "angehobene" Bodenblech-Baugruppe in den beiden Varianten B1a bzw. B1b eingesetzt, Die beiden Bodenblech-Baugruppen B1a und B1b weisen jeweils eine rahmenförmige Tragstruktur auf. Die erste Bodenblech-Baugruppe B1a ist für die Kraftfahrzeuge mit "Elektroantrieb" vorgesehen. Hier ist die Batterie 62 als "tragendes Strukturbauteil" eingesetzt und übernimmt maßgeblich die Aussteifung der rahmenförmigen Bodenblech-Baugruppe B1a. Die Bodenblech-Baugruppe B1b ist für die Kraftfahrzeuge mit "Hybridantrieb" und mit "Verbrennungsantrieb" vorgesehen. Bei der Bodenblech-Baugruppe B1b ist zur Darstellung einer ausreichenden Struktursteifigkeit wenigstens ein aussteifendes Zusatzbauteil ZB vorgesehen.

### Bezugszeichenliste

- AL1: Abgasleitung
- AL2: Abgasleitung
- B1a: Bodenblech-Baugruppe
- B1b: Bodenblech-Baugruppe
- BR: Einbauraum
- E: Endabschnitt
- EH: Elektromotor
- EV: Elektromotor
- F1: Befestigungsflansch
- F2: Befestigungsflansch
- F3: Befestigungsflansch
- FR: Fahrtrichtung !!!
- G1: Gepäckraumboden-Baugruppe
- G2: Gepäckraumboden-Baugruppe
- HA: Hinterachse
- HR: Hinterrad
- L: vorderer Längsträger
- QT1: vorderer Querträger
- QT2: hinterer Querträger
- QT3: mittlerer Querträger
- R: Rahmenabschnitt
- S: Schraube
- SD1: Endschalldämpfer
- SD2: Endschalldämpfer
- ST: seitlicher Längsträger
- V: Verschraubungsstelle
- VB: flächiges Verschlussbauteil
- VM: Verbrennungsmotor
- VO1': Vorderwagen-Baugruppe
- VP1: Verstärkungsprofil
- VP2: Verstärkungsprofil
- VR: Vorderrad
- X: Längsrichtung
- Y: Querrichtung
- Z: Hochrichtung
- ZB: aussteifendes Zusatzbauteil
- 50: Kraftstoffbehälter
- 60": Gehäuse
- 60a: Batterie
- 62: Batterie
- 63a: Deckel
- 63b: Boden
- 64: Ausbauchung

## Patentansprüche

1. Gruppe von Kraftfahrzeugen eines Fahrzeugtyps, wobei
- die Gruppe Kraftfahrzeuge mit drei unterschiedlichen Antriebskonzepten umfasst,
- die drei Antriebskonzepte einen Verbrennungsmotor ("Verbrennungsantrieb") oder einen Elektromotor ("Elektroantrieb") oder eine Kombination aus einem Verbrennungsmotor und wenigstens einem Elektromotor ("Hybridantrieb") umfassen, wobei
- eine für alle Antriebskonzepte einheitliche Vorderwagen-Baugruppe (VO1') mit vorderen Längsträgern (L) vorgesehen ist,
- zwei Bodenblech-Baugruppen (B1a, B1b) vorgesehen sind, deren Höhenlage in der Einbaulage im Kraftfahrzeug identisch ist,
- die Rohbaustrukturen der Kraftfahrzeuge mit "Elektroantrieb" die erste Bodenblech-Baugruppe (B1a) aufweisen,
- die Rohbaustrukturen der Kraftfahrzeuge mit "Verbrennungsantrieb" und der Kraftfahrzeuge mit "Hybridantrieb" die zweite Bodenblech-Baugruppe (B1b) aufweisen,
- die Kraftfahrzeuge mit "Elektroantrieb" und die Kraftfahrzeuge mit "Hybridantrieb" wenigstens eine unter der Bodenblech-Baugruppe (B1a, B1b) großflächig angeordnete Batterie (62; 60a) aufweisen,
- beide Bodenblech-Baugruppen (B1a, B1b) rahmenartig aufgebaut sind, mit zwei seitlichen Längsträgern (ST), einem die vorderen Endabschnitte (E) der seitlichen Längsträger (L) verbindenden vorderen Querträger (QT1), mit einem die hinteren Endbereiche der seitlichen Längsträger (ST) verbindenden hinteren Querträger (QT2) sowie mit wenigstens einem die beiden seitlichen Längsträger (ST) verbindenden mittleren Querträger (QT3), der zwischen dem vorderen und dem hinteren Querträger (QT1 bzw. QT2) angeordnet ist, so dass sich wenigstens zwei Rahmenabschnitte (A) ergeben, die von den seitlichen Längsträgern (ST) und den Querträgern (QT1, QT2, QT3) begrenzt sind, wobei
- der vordere Querträger (QT1) und sein Verbindungsbereich mit den vorderen Längsträgern (L) so ausgebildet ist, dass die Einleitung von Kräften aus den vorderen Längsträgern (L) in den vorderen Querträger erfolgt, ohne weitere Erstreckung des Verbindungsbereichs an der Unterseite der Bodenblech-Baugruppen (B1a, B1b), **dadurch gekennzeichnet, dass**
- bei der ersten Bodenblech-Baugruppe (B1a) in der Einbaulage im Kraftfahrzeug alle Rahmenabschnitte (A) von der wenigstens einen Batterie (62) ausgesteift sind, während
- bei der zweiten Bodenblech-Baugruppe (B1b) zumindest ein Rahmenabschnitt (A) mit einem aussteifenden Zusatzbauteil (ZB) versehen ist.

2. Gruppe von Kraftfahrzeugen nach Anspruch 1,
**dadurch gekennzeichnet, dass** das aussteifende Zusatzbauteil (ZB) durch Verschraubung mit den Längs- und/oder Querträgern (L; QT1, QT2, QT3) verbunden ist.

3. Gruppe von Kraftfahrzeugen nach Anspruch 1 oder 2,
**dadurch gekennzeichnet, dass** in wenigstens einen Rahmenabschnitt (A) der Bodenblech-Baugruppen (B1a, B1b) ein flächiges Verschlussbauteil (VB) eingesetzt ist.

4. Gruppe von Kraftfahrzeugen nach einem der vorangegangen Ansprüche,
**dadurch gekennzeichnet, dass** bei den Kraftfahrzeugen mit "Hybridantrieb" und/oder mit "Elektroantrieb" die wenigstens eine Batterie (60a; 62) durch Verschraubung mit der Bodenblech-Baugruppe (B1a, B1b) verbunden ist.

5. Gruppe von Kraftfahrzeugen nach Anspruch 4,
**dadurch gekennzeichnet, dass** die seitlichen Längsträger (ST) und/oder die Querträger (QT1, QT2, QT3) ein Lochbild mit einer Mehrzahl von Verschraubungsstellen (V) aufweisen, das zur Verschraubung unterschiedlicher Batterien (60a; 62) ausgebildet ist, wobei die Verschraubungsstellen (V) zur Anbindung der unterschiedlichen Batterien (60a; 62) zumindest teilweise identisch sind.

6. Gruppe von Kraftfahrzeugen nach einem der vorangegangenen Ansprüche,
**dadurch gekennzeichnet, dass** bei den Kraftfahrzeugen mit "Verbrennungsantrieb" und bei den Kraftfahrzeugen mit "Hybridantrieb" an der Unterseite der Bodenblech-Baugruppe (B1b) wenigstens ein Kraftstoffbehälter (50) vorgesehen ist.

7. Gruppe von Kraftfahrzeugen nach einem der vorangegangenen Ansprüche,
**dadurch gekennzeichnet, dass** sich bei den Kraftfahrzeugen mit "Hybridantrieb" der Kraftstoffbehälter (50) und die Batterie (60a) über nahezu die gesamte Breite der Bodenblech-Baugruppe (B1b) erstrecken und (in Längsrichtung des Kraftfahrzeugs betrachtet) hintereinander angeordnet sind.

8. Gruppe von Kraftfahrzeugen nach einem der vorangegangenen Ansprüche 1 bis 6,
**dadurch gekennzeichnet, dass** sich bei den Kraftfahrzeugen mit "Hybridantrieb" der Kraftstoffbehälter (50) und die Batterie (60a) nur über einen Teil der Breite der Bodenblech-Baugruppe (B1b) erstrecken und (in Längsrichtung des Kraftfahrzeugs betrachtet) nebeneinander angeordnet sind.

9. Gruppe von Kraftfahrzeugen nach Anspruch 8,
**dadurch gekennzeichnet, dass** zwischen Kraftstoffbehälter (50) und Batterie (60a) ein Freiraum für wenigstens eine Komponente einer Abgasanlage (AL2) vorgesehen ist.

10. Gruppe von Kraftfahrzeugen nach einem der Ansprüche 6 bis 9,
**dadurch gekennzeichnet, dass** sich der Kraftstoffbehälter (50) und/oder die Batterie (60a), in Längsrichtung des Kraftfahrzeugs betrachtet, bis in einen Bereich unterhalb von Rücksitzen des Kraftfahrzeugs und/oder bis in einen Bereich einer Hinterachse (HA) des Kraftfahrzeugs erstrecken und in diesem hinteren Bereich eine größere Bauhöhe aufweisen als in ihrem vorderen Bereich.

11. Gruppe von Kraftfahrzeugen nach einem der vorangegangenen Ansprüche,
**dadurch gekennzeichnet, dass** bei den Kraftfahrzeugen mit "Verbrennungsantrieb" an der Unterseite der Bodenblech-Baugruppe (B1b) wenigstens ein Gehäuse (60") und/oder eine Befestigungseinrichtung für wenigstens eine Komponente des Kraftfahrzeugs vorgesehen ist.

## Claims

1. Motor vehicle group of a vehicle type, wherein
- the group comprises motor vehicles with three different drive concepts,
- the three drive concepts comprise an internal combustion engine ("combustion drive") or an electric motor ("electric drive") or a combination of an internal combustion engine and at least one electric motor ("hybrid drive"), wherein
- a uniform front end assembly (V01') with front longitudinal members (L) is provided for all drive concepts,
- two floor panel assemblies (B1a, B1b) are provided, the height of which is identical in the installation position in the motor vehicle,
- the body-in-white structures of the "electric drive" motor vehicles have the first floor panel assembly (B1a),
- the body-in-white structures of the "internal combustion engine" motor vehicles and the "hybrid drive" motor vehicles have the second floor panel assembly (B1b),
- the motor vehicles with "electric drive" and the motor vehicles with "hybrid drive" have at least one battery (62; 60a) arranged over a large area under the floor panel assembly (B1a, B1b),
- both floor panel assemblies (B1a, B1b) are of frame-like construction, comprising two side longitudinal members (ST), a front cross member (QT1) connecting the front end portions (E) of the side longitudinal members (L), a rear cross member (QT2) connecting the rear end regions of the side longitudinal members (ST), and at least one middle cross member (QT3) connecting the two side longitudinal members (ST), which middle cross member is arranged between the front and rear cross members (QT1 and QT2), so as to form at least two frame portions (A) delimited by the side longitudinal members (ST) and the cross members (QT1, QT2, QT3), wherein
- the front cross member (QT1) and its connecting region with the front longitudinal members (L) are formed in such a way that forces are introduced from the front longitudinal members (L) into the front cross member without further extension of the connecting region on the underside of the floor panel assemblies (B1a, B1b), **characterized in that**
- in the first floor panel assembly (B1a), in the installed position in the motor vehicle, all frame portions (A) are stiffened by the at least one battery (62), whereas
- in the second floor panel assembly (B1b), at least one frame portion (A) is provided with a stiffening add-on component (ZB).

2. Motor vehicle group according to Claim 1,
**characterized in that** the stiffening add-on component (ZB) is connected to the longitudinal and/or transverse members (L; QT1, QT2, QT3) by bolting.

3. Motor vehicle group according to Claim 1 or 2,
**characterized in that** a flat closure component (VB) is inserted into at least one frame portion (A) of the floor panel assemblies (B1a, B1b).

4. Motor vehicle group according to one of the preceding claims,
**characterized in that**, in the case of the motor vehicles with "hybrid drive" and/or with "electric drive", the at least one battery (60a; 62) is connected to the floor panel assembly (B1a, B1b) by bolting.

5. Motor vehicle group according to Claim 4,
**characterized in that** the side longitudinal members (ST) and/or the cross members (QT1, QT2, QT3) have a hole pattern with a plurality of bolting points (V) which is configured for bolting together different batteries (60a; 62), wherein the bolting points (V) for connecting the different batteries (60a; 62) are at least partially identical.

6. Motor vehicle group according to one of the preceding claims,
**characterized in that** in the case of the motor vehicles with "combustion drive" and in the case of the motor vehicles with "hybrid drive" at least one fuel tank (50) is provided on the underside of the floor panel assembly (B1b) .

7. Motor vehicle group according to one of the preceding claims, **characterized in that**, in the case of the "hybrid drive" motor vehicles, the fuel tank (50) and the battery (60a) extend over virtually the entire width of the floor panel assembly (B1b) and are arranged one behind the other (as viewed in the longitudinal direction of the motor vehicle).

8. Motor vehicle group according to one of the preceding Claims 1 to 6,
**characterized in that**, in the "hybrid drive" motor vehicles, the fuel tank (50) and the battery (60a) extend only over part of the width of the floor panel assembly (B1b) and are arranged side by side (as viewed in the longitudinal direction of the motor vehicle).

9. Motor vehicle group according to Claim 8,
**characterized in that** a free space for at least one component of an exhaust system (AL2) is provided between the fuel tank (50) and the battery (60a).

10. Motor vehicle group according to one of Claims 6 to 9,
**characterized in that** the fuel tank (50) and/or the battery (60a), as viewed in the longitudinal direction of the motor vehicle, extend into a region below rear seats of the motor vehicle and/or into a region of a rear axle (HA) of the motor vehicle and have a greater overall height in this rear region than in their front region.

11. Motor vehicle group according to one of the preceding claims,
**characterized in that**, in the case of the motor vehicles with "combustion drive", at least one housing (60") and/or a fastening device for at least one component of the motor vehicle is provided on the underside of the floor panel assembly (B1b).

## Revendications

1. Groupe de véhicules automobiles d'un type de véhicule,
- le groupe comprenant des véhicules automobiles qui comportent trois concepts d'entraînement différents,
- les trois concepts d'entraînement comprenant un moteur à combustion interne (« entraînement thermique ») ou un moteur électrique (« entraînement électrique ») ou une combinaison d'un moteur à combustion interne et d'au moins un moteur électrique (« entraînement hybride »),
- un ensemble formant avant de véhicule (V01') étant prévu qui est pourvu de longerons avant (L) et qui est le même pour tous les concepts d'entraînement,
- deux ensembles formant panneau de plancher (B1a, B1b) étant prévus dont la position en hauteur est identique lors de leur installation dans le véhicule automobile,
- les structures de coque des véhicules automobiles à « entraînement électrique » comportant le premier ensemble formant panneau de plancher (B1a),
- les structures de coque des véhicules automobiles à « entraînement thermique » et des véhicules automobiles à « entraînement hybride » comportant le deuxième ensemble formant panneau de plancher (B1b),
- les véhicules automobiles à « entraînement électrique » et les véhicules automobiles à « entraînement hybride » comportant au moins une batterie (62 ; 60a) disposée sur une grande surface sous l'ensemble formant panneau de plancher (B1a, B1b),
- les deux ensembles formant panneau de plancher (B1a, B1b) étant construits comme un cadre qui comprend deux longerons latéraux (ST), une traverse avant (QT1) reliant les portions d'extrémité avant (E) des longerons latéraux (L), et une traverse arrière (QT2) reliant des zones d'extrémité arrière des longerons latéraux (ST) et au moins une traverse médiane (QT3) reliant les deux longerons latéraux (ST) et disposée entre la traverse avant et la traverse arrière (QT1 resp. QT2) de façon à obtenir au moins deux portions de cadre (A) qui sont délimitées par les longerons latéraux (ST) et les traverses (QT1, QT2, QT3),
- la traverse avant (QT1) et sa zone de liaison aux longerons avant (L) étant conçues de manière à ce que l'introduction des forces allant depuis les longerons avant (L) jusque dans la traverse avant se fasse sans extension supplémentaire de la zone de liaison du côté inférieur des ensembles formant panneau de plancher (B1a, B1b), **caractérisé en ce que**
- dans le cas du premier ensemble formant panneau de plancher (B1a) dans la position d'installation dans le véhicule automobile, toutes les portions de cadre (A) sont rigidifiées par au moins une batterie (62), tandis que
- dans le cas du deuxième ensemble formant panneau de plancher (B1b), au moins une portion de cadre (A) est pourvue d'un composant de rigidification supplémentaire (ZB).

2. Groupe de véhicules automobiles selon la revendication 1, **caractérisé en ce que** le composant de rigidification supplémentaire (ZB) est relié aux longerons et/ou traverses (L ; QT1, QT2, QT3) par vissage.

3. Groupe de véhicules automobiles selon la revendication 1 ou 2, **caractérisé en ce qu'**un composant de fermeture plat (VB) est inséré dans au moins une portion de cadre (A) des ensembles formant panneau de plancher (B1a, B1b).

4. Groupe de véhicules automobiles selon l'une des revendications précédentes, **caractérisé en ce que**, dans le cas des véhicules automobiles à « entraînement hybride » et/ou à « entraînement électrique », l'au moins une batterie (60a ; 62) est reliée à l'ensemble formant panneau de plancher (B1a, B1b) par vissage.

5. Groupe de véhicules automobiles selon la revendication 4, **caractérisé en ce que** les longerons latéraux (ST) et/ou les traverses (QT1, QT2, QT3) présentent une configuration de trous qui est pourvue d'une pluralité de points de vissage (V) et qui est conçue pour visser différentes batteries (60a ; 62), les points de vissage (V) étant au moins partiellement identiques afin de relier les différentes batteries (60a ; 62) .

6. Groupe de véhicules automobiles selon l'une des revendications précédentes, **caractérisé en ce que**, dans le cas des véhicules automobiles à « entraînement thermique » et dans le cas des véhicules automobiles à « entraînement hybride », au moins un réservoir de carburant (50) est prévu du côté inférieur de l'ensemble formant panneau de plancher (B1b).

7. Groupe de véhicules automobiles selon l'une des revendications précédentes, **caractérisé en ce que**, dans le cas des véhicules automobiles à « entraînement hybride », le réservoir de carburant (50) et la batterie (60a) s'étendent sur la quasi-totalité de la largeur de l'ensemble formant panneau de plancher (B1b) et sont disposés l'un derrière l'autre (par référence à la direction longitudinale du véhicule automobile).

8. Groupe de véhicules automobiles selon l'une des revendications précédentes 1 à 6, **caractérisé en ce que**, dans le cas des véhicules automobiles à « entraînement hybride », le réservoir de carburant (50) et la batterie (60a) ne s'étendent que sur une partie de la largeur de l'ensemble formant panneau de plancher (B1b) et sont disposés l'un à côté de l'autre (par référence à la direction longitudinale du véhicule automobile).

9. Groupe de véhicules automobiles selon la revendication 8, **caractérisé en ce qu'**un espace libre est prévu pour au moins un composant d'un système de gaz d'échappement (AL2) entre le réservoir de carburant (50) et la batterie (60a).

10. Groupe de véhicules automobiles selon l'une des revendications 6 à 9, **caractérisé en ce que**, par référence à la direction longitudinale du véhicule automobile, le réservoir de carburant (50) et/ou la batterie (60a) s'étendent dans une zone située au-dessous des sièges arrière du véhicule automobile et/ou dans une zone d'un essieu arrière (HA) du véhicule automobile et présentent une hauteur hors tout plus importante dans cette zone arrière que dans leur zone avant.

11. Groupe de véhicules automobiles selon l'une des revendications précédentes, **caractérisé en ce que**, dans le cas des véhicules automobiles à « entraînement thermique », au moins un boîtier (60'') et/ou un dispositif de fixation destiné à au moins un composant du véhicule automobile est prévu du côté inférieur de l'ensemble formant panneau de plancher (B1b).
